# EUROPEAN PATENT SPECIFICATION

(11) **EP 1 886 467 B1**
(45) Date of publication and mention of the grant of the patent: **04.08.2010**
(21) Application number: 06772080.5
(22) Date of filing: 05.06.2006
(51) Int. Cl.: H04L 29/06

(54) **GENERATING AND TRANSFORMING CALL CONTROL ELEMENTS, DIALOG ELEMENTS, AND SESSION INITIATION PROTOCOL MESSAGES FOR TELEPHONY SERVICE APPLICATIONS**
GENERIERUNG UND UMWANDLUNG VON ANRUFSTEUERUNGSELEMENTEN, DIALOGELEMENTEN UND SITZUNGSBEGINNPROTOKOLLNACHRICHTEN FÜR TELEFONDIENSTANWENDUNGEN
CREATION ET TRANSFORMATION D'ELEMENTS DE CONTROLE D'APPELS, D'ELEMENTS DE DIALOGUE ET DE MESSAGES DE PROTOCOLE DE LANCEMENT DE SESSIONS POUR APPLICATIONS DE SERVICES TELEPHONIQUES

(30) Priority: 03.06.2005 US 687135 P
(43) Date of publication of application: 13.02.2008
(73) Proprietor: Sonus Networks, Inc., Chelmsford, MA 01825 (US)
(72) Inventor: MENON, Sunil (Villa 141), Ramagondahalli Bangalore - Karnataka (IN); TINGLEY, Alan, Danville, NH 03819 (US); NICHOLS, Leon, Plano, TX 75024 (US); GAUR, Vijay, North Billerica, MA 01862 (US); PAI, Ganesh, Lexington, MA 02421 (US); REDDY, Umamaheswar, Marlborough, MA 01752 (US); BURHANUDDIN, Luqmanji, 2033 Sobha Daisy Apartments, Bangalore 560103 (IN)
(74) Representative: Greene, Simon Kenneth
(86) International application number: PCT/US2006/021634
(87) International publication number: WO 2006/133033

(56) References cited:
- EP-A- 1 343 287
- US-A1- 2002 169 776
- BAKKER J ET AL: "Next generation service creation using XML scripting languages" ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY : IEEE, US, vol. VOL. 1 OF 5, 28 April 2002 (2002-04-28), pages 2001-2007, XP010589838 ISBN: 0-7803-7400-2

## Description

### FIELD OF THE INVENTION

The present invention relates generally to computer-based methods and apparatuses, including computer program products, for generating call control and dialog elements for telephony service applications using a graphical user interface. In another aspect, the present invention relates generally to computer-based methods and apparatuses, including computer program products, for transforming call control and dialog elements for telephony service applications from an intermediate language into a target language. In another aspect, the present invention relates generally to computer-based methods and apparatuses, including computer program products, for transforming session initiation protocol messages from a first format into a second format.

### BACKGROUND

The proliferation of packet-based networks has recently led to an emerging alternative to traditional circuit-based telephony networks. Packet-based networks, such as an Internet Protocol (IP) network, have provided for the ability to packetize and transmit data content of telephony communications. Such a configuration is commonly referred to as a Voice over IP (VOIP) network and can support voice, video, and/or data content. In conjunction with the increasing use of VOIP, a growing variety oftelephony services have been developed to support and enhance user interaction. The IP Multimedia Subsystem (IMS) architecture is a standardized Next Generation Networking (NGN) architecture that provides new telephony services in a way that makes the development and delivery of new telephony services as quick and simple as possible. Underlying the IMS architecture is the Session Initiation Protocol (SIP), standardized by Request for Comment (RFC) 3261 by the Internet Engineering Task Force (IETF). While the basic structure of SIP messages conform to RFC 3261, a variety of differences exist in the format of SIP messages depending on the format used by the vendor of the originating device on the network.

The development of telephony services consists of two separate and independent steps: generation of the call control service and generation of the dialog service. The telephony service is developed and generated in a specific target language for which it will be executed in. To generate the same telephony service in another target language, a separate development process is required. EP 1 343 287 describes a system providing a graphical user interface to a packet telephone. The user may access the graphical user interface to generate SIP commands.
US2002/0169776 describes generation and control of service scripts in a communications network. A web server offers tools to the user enabling the user to manage his service profile or profiles.
Bakker et al describe the use of XML scripts for service creation in "Next generation service creation using XML scripting languages", 2002 IEEE Conference on Communications, 2002 ICC New York, NY, Proceedings. Volume 1 of 5, pages 2001-2007.
US 2004/0 230637-A1 discloses a method involving an integrated call control and dialog application with a graphical user interface and at least one call control element and at least one dialog element.

### SUMMARY OF THE INVENTION

One approach to generating telephony applications is to generate call control and dialog elements using a graphical user interface. In one aspect, there is a method. The method includes providing a graphical user interface, enabling a user, using the graphic user interface, to select an element from a plurality of elements, and generating a module for telephony applications using the graphical user interface. The plurality of elements include at least one call control element and at least one dialog element. The at least one call control element defines control of at least one call event associated with the at least one dialog element.

In another aspect, there is a system. The system includes a service creation environment. The service creation environment includes a service creation tool adapted to provide a graphical user interface, enable a user, using the graphical user interface, to select an element from a plurality of elements, and generate a module for telephony applications using the graphical user interface. The plurality of elements include at least one call control element and at least one dialog element. The at least one call control element defines control of at least one call event associated with the at least one dialog element

In another aspect, there is a computer program product. The computer program product is tangibly embodied in an information carrier, the computer program product including instructions being operable to cause a data processing apparatus to provide a graphical user interface, enable a user, using the graphical user interface, to select an element from a plurality of elements, and generate a module for telephony applications using the graphical user interface. The plurality of elements include at least one call control element and at least one dialog element. The at least one call control element defines control of at least one call event associated with the at least one dialog element.

In other examples, any of the aspects above can include one or more of the following features. The method can also include coupling, using the graphical user interface, the dialog element with the call control element. Coupling the dialog element with the call control element can include inserting a reference to the dialog element in the call control element. Coupling the dialog element with the call control element can include embedding the dialog element in the call control element. The plurality of elements can include one or more of: a design file, source code, an executable file, or any combination thereof. The call control element can be based on: Call Control XML (CCXML), Call Processing Language (CPL), or any combination thereof.
The call control element can be embedded within a Java Server Page (JSP). The method can also include providing a set of one or more predefined call control elements. The call control element can be included in the set. The dialog element can be based on: Voice XML (VXML), Media Server Control Markup Language (MSCML), Media Server Markup Language (MSML), Media Objects Markup Language (MOML), or any combination thereof. The dialog element can be embedded within a Java Server Page (JSP). The method can also include providing a set of one or more predefined dialog elements. The dialog element can be included in the set. The call control element or the dialog element can include an element based on an ECMA script. Generating the module can include configuring the call control element or the dialog element. Generating the module can include defining a call flow, the call flow including the call control element or the dialog element. The method can also include providing a textual user interface and configuring the module using the textual user interface.

Any of the above implementations can realize one or more of the following advantages. The service creation tool provides a graphical user interface, which presents a simple to use drag-and-drop development environment for service developers to generate new applications and services with ease and speed. The graphical user interface, which includes call control and dialog elements, allows for rapid service creation, testing, and deployment of integrated call control and dialog services for advanced telecommunication applications. By accelerating application development, the graphical user interface significantly reduces programming and development costs. Moreover programmers require knowledge of standards-based web tools, and not proprietary software development kits.

One approach to generating telephony applications is to transform call control and dialog elements from an intermediate language into a target language. In one aspect, there is a method. The method includes generating a module for telephony applications, where the module includes a plurality of elements, at least a first element of the plurality of elements being a call control element and at least a second element of the plurality of elements being a dialog element. The call control element defines control of at least one call event associated with the dialog element. The method also includes storing the module in an intermediate design file. The intermediate design file is based on one or more intermediate languages. The method also includes transforming at least a part of the intermediate design file, using a transformation rule, into one or more target design files. The one or more target design files are based on one or more target languages. The one or more target languages are different from the one or more intermediate languages.

In other examples, any of the aspects above can include one or more of the following features. The one or more intermediate languages can include: Call Control XML (CCXML), Call Processing Language (CPL), Voice XML (VXML), Media Server Control Markup Language (MSCML), Media Server Markup Language (MSML), Media Objects Markup Language (MOML), or any combination thereof. The one or more intermediate languages can include an extensible Markup Language (XML). The one or more intermediate languages can include a generic language. The one or more target languages can include: Call Control XML (CCXML), Call Processing Language (CPL), Voice XML (VXML), Media Server Control Markup Language (MSCML), Media Server Markup Language (MSML), Media Objects Markup Language (MOML), or any combination thereof. The method can also include encapsulating at least one of the one or more target design files within a Java Server Page (JSP). The intermediate language can be based on a model, the model including a call control component associated with the call control element and a dialog component associated with the dialog element. The call control component can define a call event function. The call event, function can include: a start function, an end function, a log function, an action function, a call action function, a dialog function, or any combination thereof. The call action function can include: an answer function, a connect function, a disconnect function, a redirect function, a remove function, a create call function, a create conference function, or any combination thereof. The dialog component can define a dialog function. The dialog function can include: a start function, an end function, a log function, an action function, a play action function, a form function, a menu function, or any combination thereof. The play action function can include: a prompt function, a record function, or any combination thereof. The transformation rule can be based on an extensible Stylesheet Language Transformation (XSLT). The method can also include assembling the one or more target design files into one or more web applications. At least one of the one or more web applications can include at least one of: one or more call control applications, or one or more dialog applications.

Any of the above implementations can realize one or more of the following advantages. By generating an intermediate language, developers can capture the design information of an application in a single design source that can be transformed into multiple target languages, which allows previously designed applications to be targeted at one or more platforms without having to modify the initial design.

One approach to interworking signaling messages is to transform messages from a first format into a second format. In one aspect, there is a method. The method includes associating a first set of one or more instructions with a rule, and receiving a session initiation protocol message, where the session initiation protocol message is based on a first format. The method also includes determining, using the rule, whether the first set of one or more instructions are applicable to the session initiation protocol message, and transforming the session initiation protocol message, using the first set of instructions, into a target session initiation protocol message when the first set of one or more instructions are applicable to the session initiation protocol message. The target session initiation protocol message is based on a second format different from the first format

In other examples, any of the aspects above can include one or more of the following features. The session initiation protocol message can be received from a transport layer defined by the Open Systems Interconnection (OSI) reference model. The method can also include forwarding the target session initiation protocol message to an application layer defined by the OSI reference model The target session initiation protocol message can include a normalized session initiation protocol message. The session initiation protocol message can be received from an application layer defined by the Open Systems Interconnection (OSI) reference model. The method can also include forwarding the target session initiation protocol message to a transport layer defined by the OSI reference model. The method can also include identifying a parameter in the session initiation protocol message, the parameter comprising: a predetermined address, a predetermined TCP or UDP port, a Transport Control Protocol (TCP) ID, a session initiation protocol method, or any combination thereof. The predetermined address can include a source IP address, a destination IP address, or any combination thereof. The session initiation protocol method can include: INVITE, RE-INVITE, REGISTER, ACK, CANCEL, BYE, OPTIONS, INFO, NOTIFY, SUBSCRIBE, UNSUBSCRIBE, UPDATE, MESSAGE, REFER, PRACK, PUBLISH, or any combination thereof. The method can also include determining whether the first set of one or more instructions are applicable to the session initiation protocol message comprises matching the parameter with a corresponding rule parameter, the rule including the rule parameter. The first set of one or more instructions can be based on: Practical Extraction and Report Language (PERL), Tool Command Language (TCL), C, C++, or any combination thereof. The method can also include transforming the session initiation protocol message into the target session initiation protocol message comprises: manipulating, adding, or removing one or more SIP headers within the session initiation protocol message. The method can also include transforming the session initiation protocol message into the target session initiation protocol message comprises manipulating a start-line within the session initiation protocol message. The method can also include transforming the session initiation protocol message into the target session initiation protocol message comprises manipulating a body portion within the session initiation protocol message. An object can include the rule, wherein the object can be stored in a database. The object can further include a name, a description, a name of the first set of one or more instructions, or any combination thereof.

Any of the above implementations can realize one or more of the following advantages. Message customization in interworking scenarios allows the end agents, regardless of what format they use for SIP messages, to seamlessly interact with each other as if they used the same format. In addition, message customization using scripts allows the design of systems to be greatly simplified compared to having to change code at the SIP protocol level to accomplish similar results. In addition, SIP customization using scripts also allows for fast development, because small scripts can easily be created. Scripts adapted for string manipulation are especially adapted for SIP customization, because SIP is a text based protocol. In addition, scripts provide more flexibility to users (e.g., service providers), because they can change and/or add scripts for SIP customization in interworking scenarios instead of waiting for the release of a patch. The simplicity of using scripts also allows for quicker development, testing, and/or market delivery of SIP processing systems.

Other aspects and advantages of the present invention will become apparent from the following detailed description, token in conjunction with the accompanying drawings, illustrating the principles of the invention by way of example only.

### BRIEF DESCRIPTION OF THE DRAWINGS

The foregoing and other objects, features, and advantages of the present invention, as well as the invention itself, will be more fully understood from the following description of various embodiments, when read together with the accompanying drawing.

FIG. 1 is a block diagram showing an exemplary network with devices relating to the generation, provisioning, and execution of telephony services.

FIG. 2 is a flowchart depicting the generation, provisioning, and execution of a telephony service.

FIG. 3 illustrates a call flow diagram depicting the execution of a telephony service.

FIG. 4 illustrates a process flow depicting the development, assembly, testing, and deployment of a telephony service in the service creation environment

Figures 5A and 5E are block diagrams illustrating an exemplary UML model of call control and dialog elements of an intermediate language.

Figures 6A to 6D are block diagrams showing an exemplary graphical user interface relating to generating telephony services.

FIG. 7 is a block diagram showing the components of an application server.

FIG. 8 illustrates another call flow diagram depicting the execution of a telephony service.

FIG. 9 is a block diagram showing the components of a SIP access layer.

### DETAILED DESCRIPTION

In VOIP networks, such as an IMS network, telephony services can include voice calls/conferencing, video calls/conferencing, text and/or instant messaging, push-to-talk over cellular (POC), multiparty gaming, database access, user-defined ringback tones, and/or other network communication. Such telephony services can be implemented as telephony service applications to provide for respective call control, dialog control, and/or other telephony service functions. Telephony service call control can include controlling call setup, call modification, dialog invocation, and/or call termination, where the call can be between two or more parties and/or between a party and one or more servers for accessing one or more databases. Call control can be implemented using an application comprising a set of instructions based on, for example, Call Control extensible Markup Language (CCXML), Call Processing Language (CPL), CallXML (developed by Voxeo Corp., located in Orlando, FL), and/or other call control languages. Telephony service applications can also provide for dialog control for user interaction between a user and one or more databases. User interaction can include, for example, playing a prompt and/or collecting information (e.g., by voice and/or dual-tone multifrequency (DTMF) interaction). Dialog control can be implemented using an application comprising a set of instructions based on, for example, Voice extensible Markup Language (VXML), Media Server Control Markup Language (MSCML), Media Server Markup Language (MSML), Media Objects Markup Language (MOML), Speech Application Language Tags (SALT), other interactive voice response (IVR) languages, and/or other dialog control languages. Telephony service applications can also include scripts, e.g., ECMA-based scripts, JavaScripts, JScripts, and/or the like, for performing additional functions, e.g., computation of data required by the telephony service. In addition, telephony services can also provide a user access to one or more remote databases, in which the user can retrieve and/or update information, e.g., personal address books, personal dialing plans, personal assistants, contact lists, department information, and/or the like.

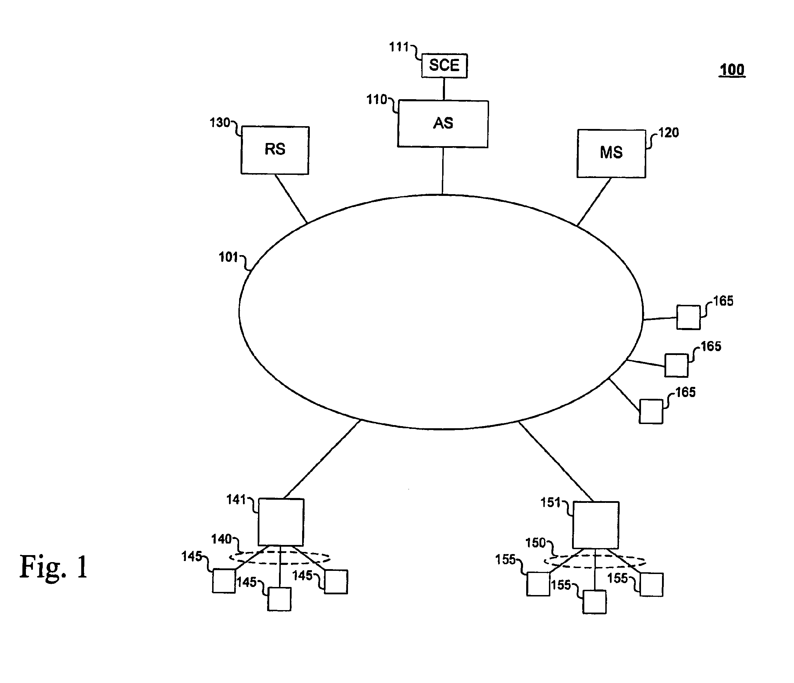

FIG. 1 is a block diagram showing an exemplary network **100** with devices relating to the generation, provisioning, and execution of telephony services. The network **100** includes a packet-based network **101,** e.g., the Internet, a carrier IP network (LAN, WAN, or the like), a private IP network, and/or other packet-based networks. Coupled to the network **101** are an application server (AS) **110,** a media server (MS) **120,** a routing server (RS) **130,** one or more access networks **140** and **150,** and one or more users **165.** The application server **110** and the media server **120** are responsible for providing a platform for executing telephony service applications. The platform includes the scripting abilities of the application server **110** (e.g., CCXML) and the media server **120** (e.g., VXML). The application server **110** can be deployed on standard Carrier Class Intel Platforms running Linux, Solaris or Windows. In this embodiment, the media server **120** is separate from the application server **110,** but other configurations can also be used, e.g., the media server **120** can be located at the same node as the application server **110.**

Connected to the application server **110** is a service creation environment (SCE) **111,** which is responsible generating telephony service applications. The SCE **111** provides a graphical user interface for generating telephony service applications with call control and dialog control capabilities. In this embodiment, the SCE **111** is connected to the application server **110,** but other configurations can also be used. For example, the SCE **111** can be included in the application server **110** or the SCE **111** can be made accessible at a remote location on the network **101.**

Generated telephony service applications can be provisioned at one or more databases (not shown), e.g., web servers, which can be locally or remotely accessible by the application server **110** and/or the media server **120.** The routing server **130** can provide for routing and/or service selection for networks with one or more application servers **110.** The routing server **130** can maintain information about the state of all the application servers **110** on the network **101,** and the set of telephony service applications that can be executed on a given application server **110.** For example, a calling agent (e.g., user **165)** can contact the routing server **130,** which returns to the calling agent the address of the application server **110.**

Gateways **141** and **151,** respectively, couple the access networks **140** and **150** to the packet-based network **101.** The access networks **140** and **150** can be, for example, another packet-based network, the Public Switched Telephone Network (PSTN), a radio access network (RAN), a private branch exchange (PBX) (Legacy or IP), and/or the like. The access networks **140** and **150** can be coupled, respectively, to a plurality of user devices **145** and **155.** The user devices **145, 155,** and **165** can be computers, telephones, IP phones, wireless phones (e.g., cellular phones, PDA devices, and/or the like), and/or other telephony devices.

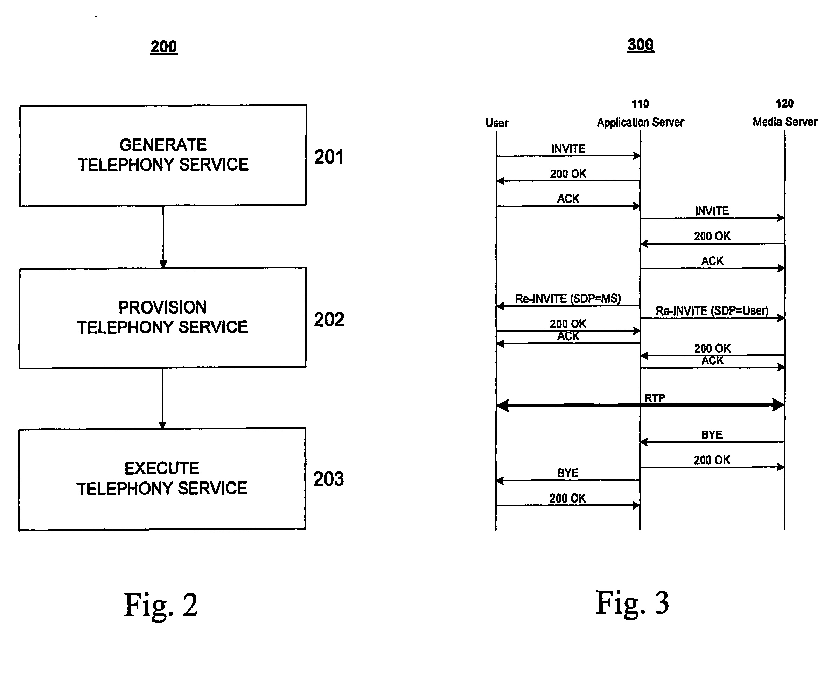

FIG. 2 illustrates a flowchart **200** depicting the generation, provisioning, and execution of a telephony service. The elements of the flowchart **200** are described using the exemplary network **100** of FIG. 1. A telephony service is generated **(201)** at the SCE **111.** The telephony service can be one or more applications (e.g., a CCXML document for call control and a VXML document for dialog control). With call control applications, a user (e.g., a service developer) can have complete control over a call flow, including whether the application server **110** behaves as a Back-to-Back User Agent (B2BUA), a Proxy Server, or a Redirect Server. Call control also provides for event handling, which can occur at any time and from a variety of sources. Call events can include actions by the call control application (e.g., an outbound-call request, or a dialog request), responses to previous actions by the call control application (e.g., an event indicating when the call goes off hook in response to the outbound-call request, or an event indicating completion of a dialog), and/or from an external source (e.g., an incoming call to be answered). Call control applications can control user interactions using dialogs. Dialogs can return information to the call control application, which can make decisions on what to do next depending on what was returned by the dialog. Call control applications can treat a dialog as an asynchronous event, meaning that when a dialog is initiated the control returns immediately back to the call control application, which can be notified of the dialog's result later by an asynchronous event. The telephony service can be provisioned **(202)** to one or more databases (not shown) as one or more applications for storage until the telephony service is required. The databases can be accessible anywhere on the network and/or accessible via one or more web servers. Provisioning can include using File Transfer Protocol (FTP), Secure shell FTP (SFTP), Secure Copy (SCP), and/or other transfer protocols. Telephony service applications can be executed **(203)** at the application server **110** and/or the media server **120.** Execution can take place using a web model, where the application server **110** and/or the media server **120** act as HyperText Transfer Protocol (HTTP) clients requesting the telephony service application as a web application from one or more web servers.

FIG. 3 illustrates a call flow **300** for setting up a call between a user, e.g. **165,** and a media server **120.** The call can be, for example, a user wishing to access information in a database. The elements of the call flow **300** are described using signaling messages based on Session Initiation Protocol (SIP) and the exemplary network **100** of FIG. 1. However, other signaling protocols (e.g., H.323 or SS7) can also be used. The ladder diagram begins when a user sends an INVITE message to the application server **110.** The application server **110** retrieves and executes the applicable call control application (e.g., a particular CCXML document). The application server **110** sends a 200 OK message to the user to inform the user that the application server **110** successfully retrieved the relevant telephony service application. The user sends an ACK message to the application server **110.** The application server **110** determines that the media server **120** is required and sends an INVITE message to the media server **120.** The media server **120** sends a 200 OK message to the application server **110.** The application server **110** sends an ACK message to the media server **120.** The application server **110** sends a Re-INVITE message, with Session Description Protocol (SDP) indicating the media server **120,** to the user and sends a Re-INVITE message, with Session Description Protocol (SDP) indicating the user, to the media server **120.** The user sends a 200 OK message to the application server **110.** The application server **110** sends an ACK message to the user. The media server **120** sends a 200 OK message to the application server **110.** The application server **110** sends an ACK message to the media server **120.** The user exchanges information with the media server **120** using, for example, Real-time Transfer Protocol (RTP). The media server **120** sends a BYE message to inform the application server **110** that the communication exchange is over. The application server **110** sends a 200 OK message to the media server **120.** The application server **110** sends a BYE message to the user. The user sends a 200 OK message to the application server **110.**

### SERVICE CREATION ENVIRONMENT (RUN-TIME ASPECT)

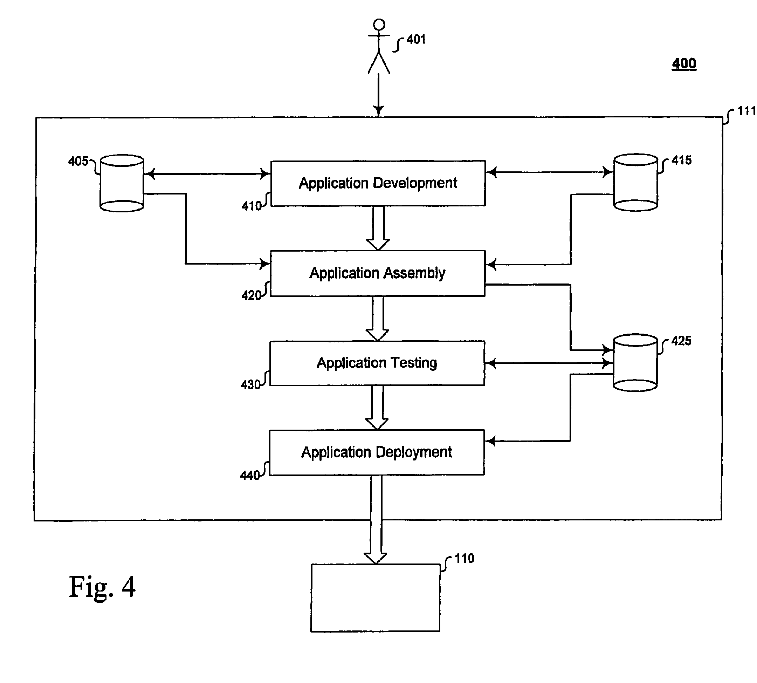

FIG. 4 illustrates a process flow **400** depicting the development, assembly, testing, and deployment of a telephony service using the SCE **111.** The SCE **111** is a development environment in which a user **401,** e.g., a service provider, can develop, edit, configure, test, debug, and/or deploy telephony service applications for the application server **110** and/or the media server **120.** The generation of a telephony service application comprises application development **(410),** application assembly **(420),** application testing **(430),** and/or application deployment **(440).** Application development **(410),** application assembly **(420),** and/or application testing **(430)** can be iterative processes performed in no particular order. The SCE **111** provides a graphical user interface (GUI) to facilitate the generation of a telephony service application that includes call control and dialog elements. A telephony service application is developed **(410)** by the user **401** using a graphical user interface. The graphical user interface can provide a drag-and-drop interface for building call control applications, which define a call flow, as well as voice dialogs associated with the call flow. In addition, the SCE **111** can provide a textual user editor for editing of the telephony service application used in conjunction with the graphical user editor. During application development, a database **405** that provides a palette of call control and dialog elements can be made available to the user **401.** The database 405 can provide a set of basic elements, or building blocks, with which to begin application development. These elements can be customized, edited, and/or integrated by the user **401** into new building blocks and stored in the database **405** as new elements for use in new application call flows. The database **405** can also provide pre-bundled, pre-configured, and/or template call applications (i.e., a "starter kit") to bootstrap application development. A starter kit can demonstrate how call control and dialog applications can be implemented for various basic functionalities. The files in the starter kit can be used directly by the application developer, and/or serve as a starting point for generating new call control and dialog applications. The call control and dialog elements provided by database **405** can be based on one or more specific languages, e.g., CCXML and/or VXML, or can be based on a generic language, e.g., Generic Service Creation Markup Language (GSCML) or a language based on XML schema, which are technology agnostic. Some in the industry have used service creation markup languages, sometimes referred to as SCML. The use of service creation markup languages herein does not imply any relationship with industry defined service creation markup language. The database **405** can also provide a set of Java Server Page (JSP) templates for encapsulating the developed call control and/or dialog applications. JSP pages allow for dynamic content generation. The database **405** can also provide a set of database storage classes used by the call control and/or dialog applications to connect to back-end systems for data retrieval. The database storage classes are used by the applications to perform such functions as, for example, custom prompt retrieval, account validation, department directory lookups, find-me/follow me configurations, and/or the like. The SCE **111** stores the developed application as one or more design files in a database **415.** The design files can be based on one or more specific languages, e.g., CCXML and/or VXML, or can be based on a generic language (e.g., GSCML) or a language based on XML schema, which are technology agnostic.

Design files can be assembled **(420)** into an application by the user **401** for testing and/or deployment. A call control portion of one or more design files can be assembled into a call control web application, which is a ready-to-run web application that embodies the call control portion of the telephony service application. A dialog portion of one or more design files can be assembled into a dialog web application, which is a ready-to-run web application that embodies the dialogs used by the call control application. The call control web application and/or the dialog web application can be assembled into one or more web application archive files (warfile). All of the files that are part of a telephony service application can be assembled together in a packaged form (e.g., as a warfile). Any applications embedded in JSP files can be compiled before assembling in a packaged form. Pre-compilation of the JSP files avoids run-time overhead of compiling during when an application is accessed. Assembled applications can be stored as design files in the database **425.**

A telephony service application can be tested **(430)** by the user **401.** Testing can be performed using a local web server and can include debugging the application using, for example, an Integrated Development Environment (IDE). For example, an application can be deployed to the local web server and executed by entering the appropriate Uniform Resource Locator (URL) for the application in a web browser. Any server-side logic can be executed just as if the telephony service application was deployed in a real environment. The returned applications, e.g., CCXML and/or VXML text, can be displayed in the web browser. If desired, an IDE can be used to remotely debug the application running on the web server, facilitating source-level debugging of the scripting (e.g., Java source) components of the application. Media servers and soft phones can be used to test dialogs directly by calling a media server with the appropriate dialog URL. This causes the media server to retrieve the dialog application just as if it were directed to do so by an application server. Testing of the call control application can be facilitated similarly. A remote debugging session opened on the call control interpreter process, e.g., a service logic execution engine, can intercept the execution of calls directed at the application server. Edited or debugged design files can be returned to the databases **425** for deployment and/or database **415** for further development if necessary.

Telephony service applications generated by the SCE **111** can be deployed **(440)** by the user **401** to a database as web applications accessible by, for example, a web server. Telephony service applications can be driven by requests received from HTTP clients (e.g., the application server **110** and/or the media server **120).** Deployment can include copying the web application archive file (warfile) to a target application server **110** and can further include activating the application. Mechanisms by which an application can be copied to the target application server **110** can include using FTP, SFTP, SCP, and/or other transfer protocols. The application can be copied from the database **425** to the application root directory of the target application server **110** and/or other database. The management mechanisms of the application server **110** can be used to install and activate the telephony service application on that server. For example, Jakarta's Tomcat server provides a Management Application by which applications can be deployed, undeployed, started, stopped, etc. The target application server **110** can host the generated telephony service application. The application server **110** can conform to the Java Servlet specification (2.3/2.4). The defined target application server can be JBoss 4.0.x/4.1.

The application assembly process **(420)** and/or the deployment process **(440)** can also include the process of transforming one or more design files from an intermediate language into one or more target languages using a transformation rule. The information captured by the SCE **111** in the intermediate design files stored in databases **415** and/or **425** can be sufficient to define the overall topology of the call control and dialog elements of a telephony service application in one or more target languages different from the intermediate language. An intermediate language can be, for example, a specific language and/or a generic language. A target language is a specific language. Specific languages can include, for example, CCXML, CPL, other call control languages, VXML, MSCML, MSML, MOML, SALT, other IVR languages, and/or other dialog control languages. A generic language can be capable of representing any of the classes in the UML model as described below. Generic languages can include, for example, GSCML, a language based on XML schema, and/or other technology agnostic languages. The intermediate design file can be transformed into a target design file using a transformation rule based on, for example, extensible Stylesheet Language Transformation (XSLT). The transformation rule can specify one or more instructions for transforming at least a portion of an intermediate design file based on an intermediate language into a target design file based on a target language. The transformation rule can be based on a "template rule", which matches a particular node or pattern in the intermediate design file and produces a particular output for the target design file.

In Attachment A listed at the end of the specification is a sample design file based on GSCML that illustrates an intermediate design file represented using a generic intermediate language. The design file listed in Attachment A represents an application that applies to an incoming call. The application invokes an off-platform web resource to determine which ring tone to present to the caller. Ring tone is determined by looking up the caller's number in a database and returning an associated ring tone filename. The application invokes a VXML dialog to be executed on a media server. The media server plays the selected ring tone. When the callee answers, the ring tone is terminated (i.e., the dialog is terminated) and the caller and callee are connected in a phone call.

The intermediate design file illustrated in Attachment A can be transformed into the CCXML target language using an XSLT transformation rule. Listed in Attachment B is the target design file based on CCXML corresponding to the GSCML document listed in Attachment A after transformation.

Below is another sample design file based on GSCML that illustrates an intermediate design file represented using a generic intermediate language. The following design file represents the dialog application associated with the CCXML application above.

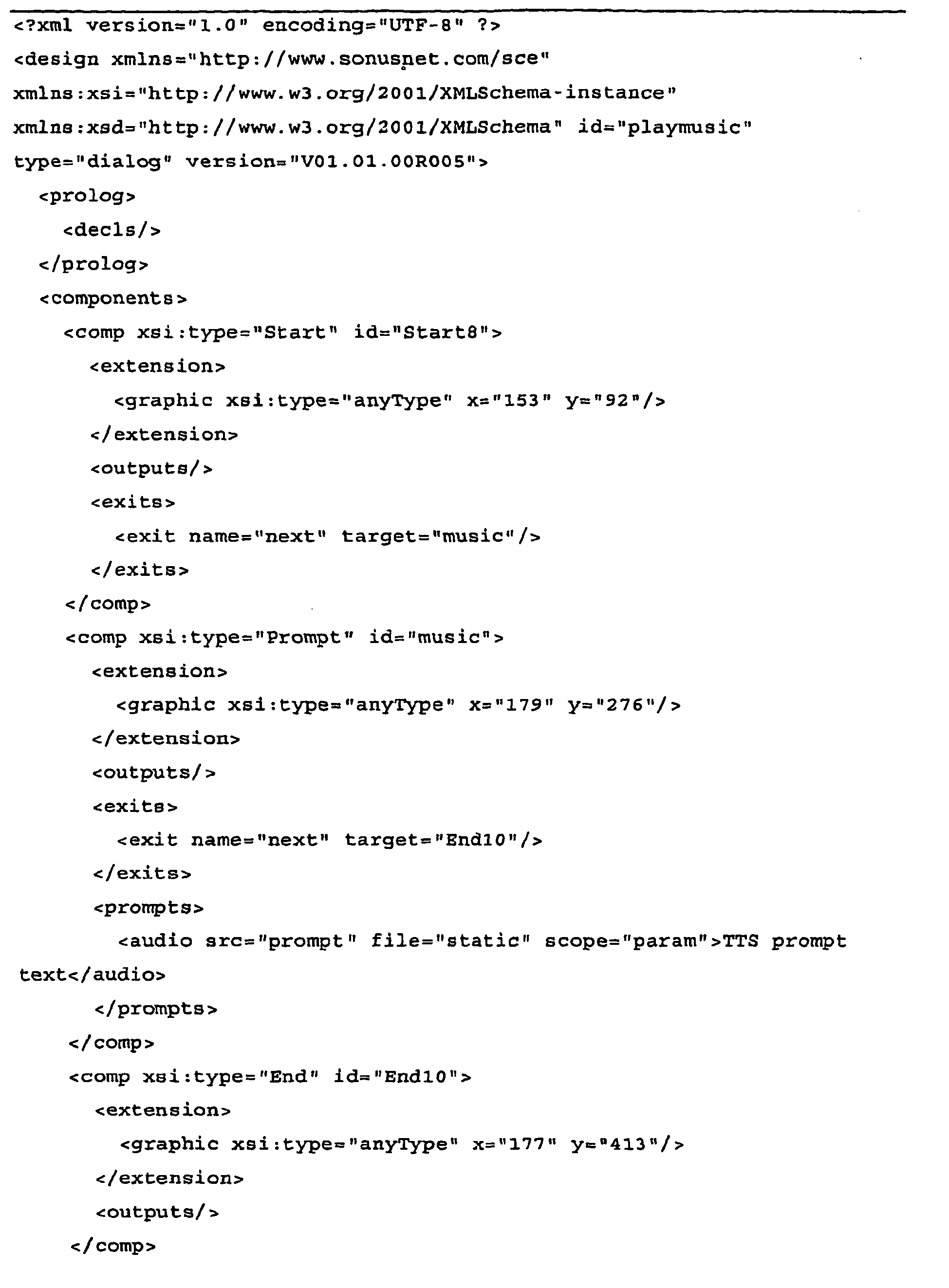

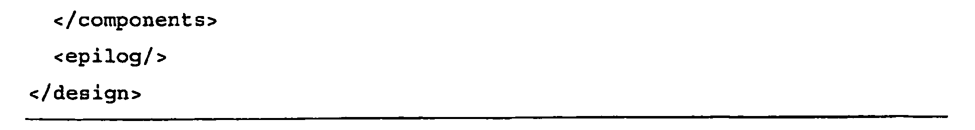

The intermediate design file illustrated above can be transformed into the VXML target language using an XSLT transformation rule. Listed in Attachment C is the target design file based on VXML and embedded within a JSP page corresponding to the above GSCML document after transformation.

In FIG. 4, the databases **405, 415,** and **425** are separate from one another, but other configurations can also be used, e.g., one or more of the databases **405, 415,** and **425** can be the same database.

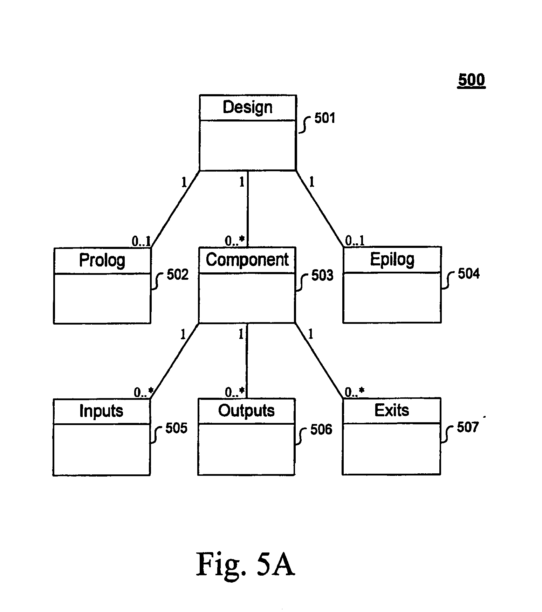

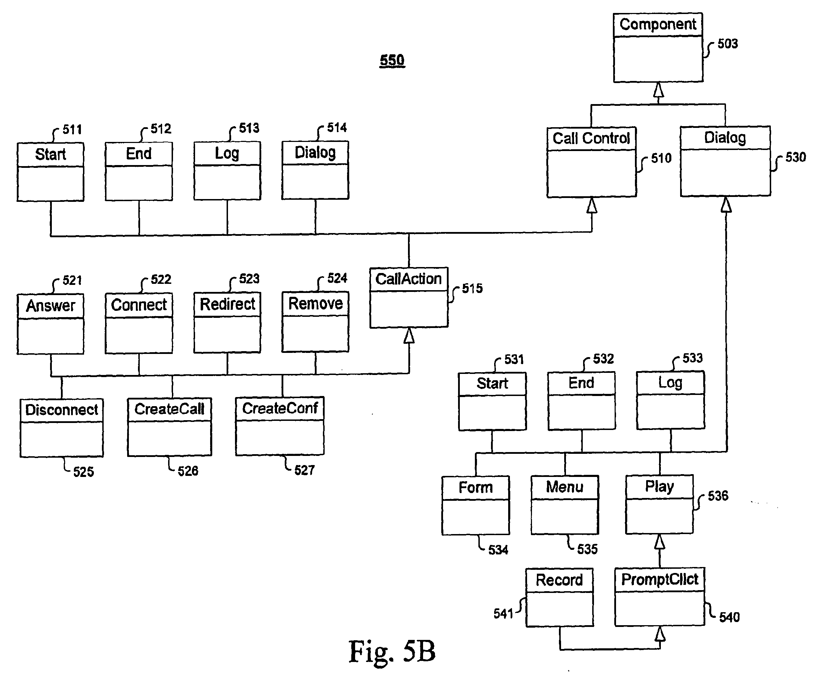

A generic language, as described above, for representing an intermediate design file can be designed to accommodate all the necessary call control and dialog information necessary to facilitate the generation of one or more specific target languages. FIGs. 5A and 5B are block diagrams **500** and **550** illustrating an exemplary Universal Modeling Language (UML) representation of the call control and dialog elements of a generic language model. The classes illustrated in diagrams **500** and **550** can be used as the source of the definitions for the available elements used in call control and dialog call flows that make up an application. This model not only can define the available design components, but can also specify the structure of the design files that are generated by the SCE **111.**

UML class diagram **500** illustrates associative relationships in an exemplary base component structure of call control and dialog classes. The Design class **501** is the overall container for a design file. Associated with the Design class **501** can be a Prolog class **502,** one or more Component classes **503,** and/or an Epilog class **504.** The Prolog class **502** can contain, for example, elements such as global variable declarations used by the application. The one or more Component classes **503** can be overall containers for the components that make up a design file. Each Component class **503** has an optional collection of Inputs **505,** Outputs **506,** and a non-empty set of Exits **507.** Inputs **505** can define the data that can be utilized by the component. Outputs **506** can define the data generated by the component. Exits **507** can define the transitions out of the component, and are associated with the 'next' component to transition to during execution. Each component class **503,** with the exception of "End" and "Abort" classes, should have at least one exit. UML class diagram **500** is a high-level structure that encapsulates the available call control and dialog design components representing the generic language.

UML class diagram **550** illustrates generalized relationships of the Component classes **503** used to represent the call control and dialog portions of a telephony service application. The Component class **503** is a generalized class that can include the Call Control class **510** and the Dialog class **530.** The Call Control class **510** is a generalized class that can include one or more of the following classes: Start **511,** End **512,** Log **513,** Dialog **514,** CallAction **515,** and/or the like. The Start class **511** can define the starting point of the application. The End class **512** can define the termination point of the application. The Log class **513** can emit a platform log message. The Dialog class **514** can invoke a user interaction dialog. The CallAction class **515** can be a base class for all call-related management functions including: Answer **521,** Connect **522,** Redirect **523,** Remove **524,** Disconnect **525,** CreateCall **526,** CreateConference **527,** and/or the like. The Answer class **521** can answers an incoming call. The Connect class **522** can connect a call leg to another call leg or conference. For example, the Connect class **522** defines <join>. The Redirect class **523** can redirect an incoming call. The Remove class **524** can remove a call leg from another call leg or conference. For example, the Remove class **524** can define <unjoin>. The Disconnect class **525** can disconnect a call leg or a dialog. The CreateCall class **526** can create a new call leg. The CreateConference class **527** can creates a new conference. The Call Action class **515** can also include additional classes not shown. For example, Reject and/or RemoveConference. The Reject class can reject an incoming call. The RemoveConference class can destroy a conference.

The Call Control class **510** can also include additional classes not shown. For example, Decision, Error, Event, Assignment, Script, Timer, and/or Action. The Decision class can be used to 'fan out' a specific output of a component when that output causes more than one transition according to associated conditions. The Error class can be a global error handler. The Event class can be a mechanism for incrementing statistics counters. The Assignment class can assign an expression to a variable. The Script class can facilitate ECMA-script programming. The Timer class can be used to start and cancel timers, where canceled timers can return the time elapsed before being canceled. The Action class can be used to communicate to other systems. For example, the Action class defines <send>. The Dialog class can be a base class for the PlayPrompt class, which can play only audio output with no user interaction expected or possible.

The Dialog class **530** is a generalized class that can include one or more of the following classes: Start **531,** End **532,** Log **533,** Form **534,** Menu **535,** Play **536,** and/or the like. The Start class **531** can define the starting point of the application. The End class **532** can define the termination point of the application. The Log class **533** can emit a platform log message. The Form class **534** can be a container for managing multiple PromptCollect/PlayPrompt components. The Menu class **535** can be a Form class with a single (multiple-choice) input that can transition to one of many destinations depending on the input. The Play class **535** plays audio output when, for example, no user interaction is expected or possible. The Play class **535** is a base class for the PromptCollect class **540,** which can extend "Play" by allowing user input. The PromptCollect **540** class can be a base class for the Record class **541,** which can extend the PromptCollect class **540** by recording the spoken input for later playback or server-side processing.

The Dialog class **530** can also include additional classes not shown. For example, Abort, Decision, Error, Event, Assignment, Script, External, Timer, Action, PromptCollect, and/or CallAction. The Abort class can define an error-condition termination point of an application. The Decision class can be used to 'fan out' a specific output of a component when that output causes more than one transition according to associated conditions. The Error class can be a global error handler. The Event class can be a mechanism for incrementing statistics counters. The Assignment class can assign an expression to a variable. The Script class can facilitate ECMA-script programming. The External class can be an external implementation of a dialog component. For example, the External class can define a <subdialog> call. The Timer class can be used to start and cancel timers, where canceled timers can return the time elapsed before being canceled. The Action class can be used to communicate to other systems. For example, the Action class can define <subdialog>, <submit>, and/or <goto>. The PromptCollect class can define a user interaction that prompts for and collects user input. The CallAction class can be a base class for all call-related management functions including the Transfer class, which can transfer the call.

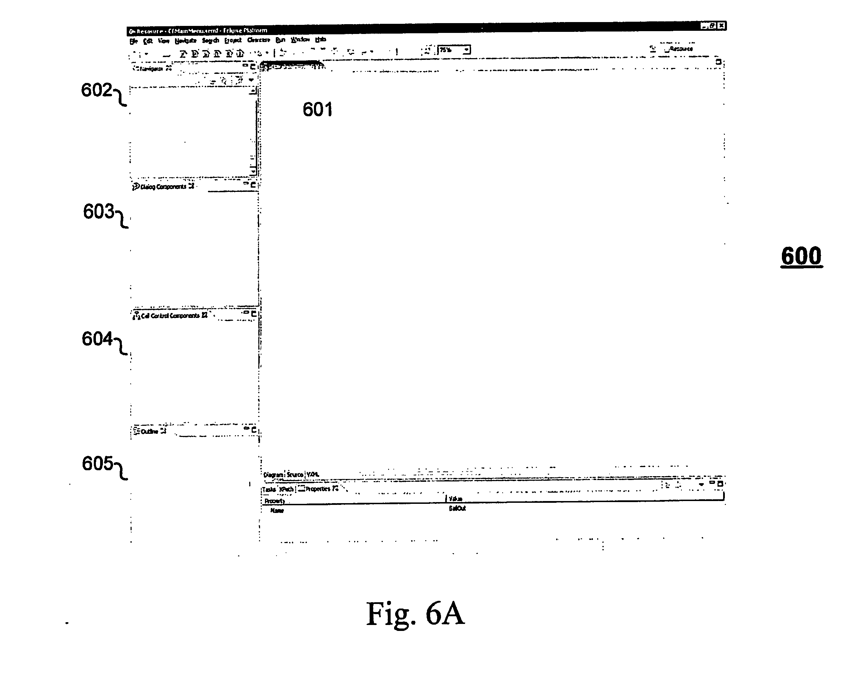

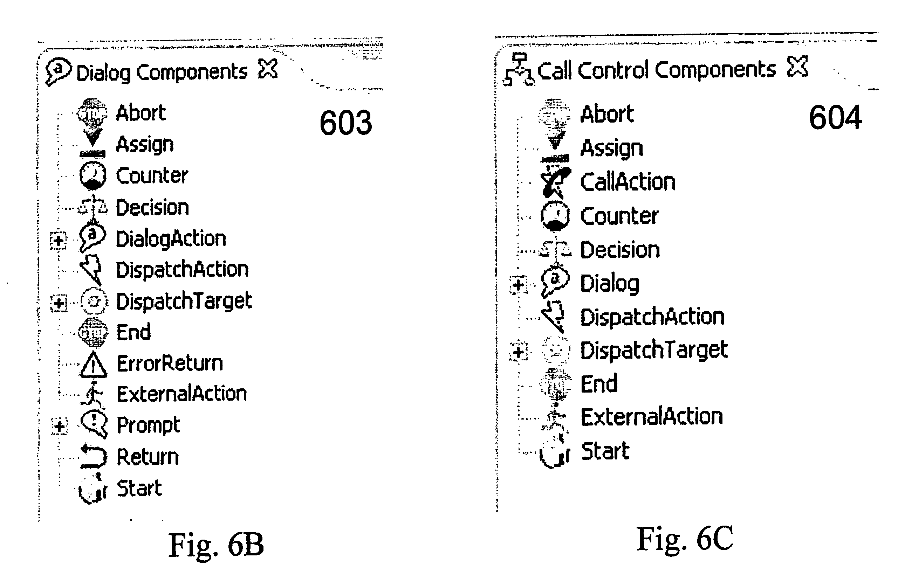

FIG. 6A is a block diagram showing an exemplary graphical user interface **600** relating to generating telephony services by the SCE **111.** The SCE **111** can provide a palette of tools to graphically develop call control and related dialog control applications. The graphical user interface **600** includes a main window **601,** a navigator window **602,** a dialog element window **603,** a call control element window **604,** and an outline window **605.** The navigator window **602** can list the working directory of the application being developed and/or provide access to other application directories. The dialog element window **603,** illustrated in FIG. 6B, can provide a palette of basic dialog elements for the development of a telephony service application. Basic dialog elements can include an Abort function, an Assign function, a Counter function, a Decision function, one or more Dialog Action functions, a Dispatch Action function, one or more Dispatch Target functions, an End function, an Error Return function, an External Action function, one or more Prompt functions, a Return function, a Start function, and/or other dialog-related functions. Each of the basic dialog elements illustrated in window **603** can be represented by a respective UML dialog component as illustrated in diagram **550.** The call control element window **604,** illustrated in FIB. 6C, can provide a palette of basic call control elements for the development of a telephony service application. Basic call control elements can include an Abort function, an Assign function, a Call Action function, a Counter function, a Decision function, one or more Dialog Action functions, a Dispatch Action function, one or more Dispatch Target functions, an End function, an External Action function, a Start function, and/or other call control-related functions. Each of the basic call control elements illustrated in window **604** can be represented by a respective UML call control component as illustrated in diagram **550.**

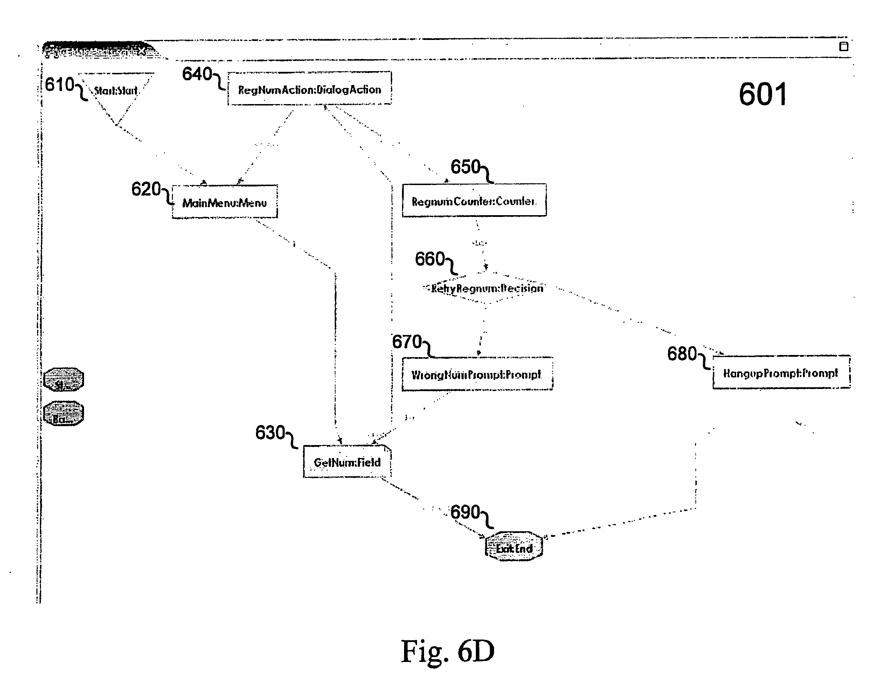

The main window **601,** illustrated in FIG. 6D, graphically illustrates the development of an example telephony service application that prompts a caller to enter in a pin number. The call flow begins with a Start element **610,** which can be a call control element initiating the call session. The call flow proceeds to a Main Menu element **620,** which can, for example, prompt the user with a list of options. In response to user input, for example, the call flow proceeds to a Get Number element **630.** If the Get Number element **630** encounters an error, the call flow proceeds to an Exit element **690.** If the Get Number element **630** successfully executes, the call flow proceeds to a Register Number Action dialog element **640,** which registers the collected number in a database. If the Register Number Action dialog element **640** successfully registers the user's pin number, the call flow returns to the Main Menu element **620.** If the Register Number Action dialog element **640** encounters a failure, the call flow proceeds to a Counter element **650** before proceeding to a Retry Decision element **660.** If the Retry Decision function **660** returns true, the call flow proceeds to a Wrong Number Prompt element **670,** which informs the user that the numbers need to be re-entered and returns to the Get Number element **630.** If the Retry Decision element **670** returns false (e.g., when the counter value exceeds a predetermined value), then the call flow proceeds to a Hang-up Prompt element **680** before proceeding to the Exit element **690.**

### APPLICATION SERVER (RUN-TIME ASPECT)

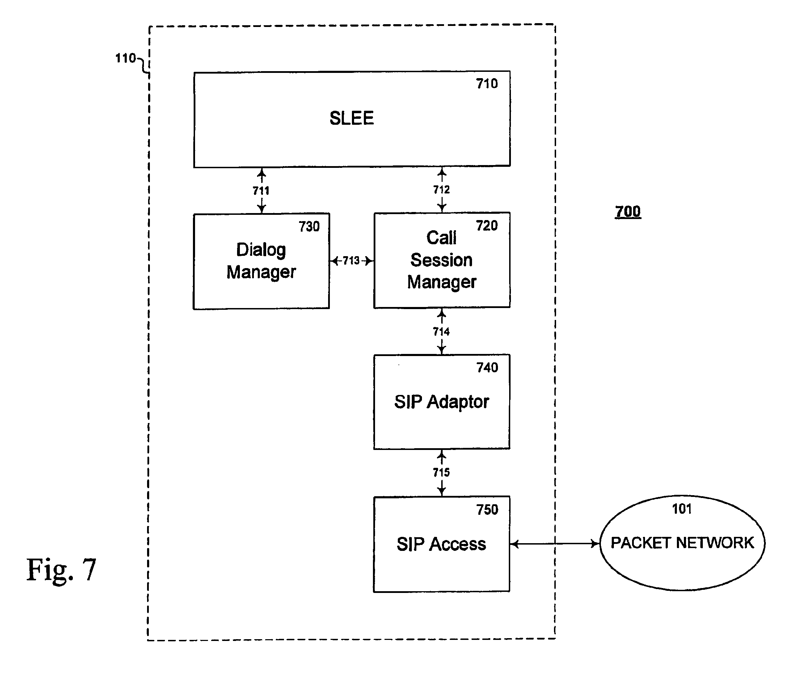

FIG. 7 is a block diagram **700** showing the components of the application server **110** illustrated in the exemplary network **100** of FIG. 1. The application server **110** includes a service logic execution engine (SLEE) **710,** a call session manager (CSM) **720,** a dialog manager (DM) **730,** a SIP Adapter **740,** and a SIP Access Layer **750.** The SLEE **710** is the session controller of a call and is adapted to provide a scriptable environment (e.g., CCXML) to control the call flow of a telephony service application. The CSM **720** manages individual call sessions participating in the telephony service by maintaining call-state information. A telephony service can have one or more sessions participating in a call at any point in time. The CSM **720** can have a finite state machine manning the state transitions for each session. The CSM **720** can also provide support to join call legs, disconnect calls, cancel calls, and/or other call session functions. The CSM **720** interfaces with the SLEE **710** via a SLEE application program interface (SAPI) **712.** The DM **730** handles dialog requests that can be included in telephony service applications executed by the SLEE **710.** The DM **730** can determine a media server **120** on which the applicable dialog application can be located and/or executed. The DM **730** can also be responsible for providing dialog related support for processing of a call flow. The DM **730** interfaces with the SLEE **710** via SAPI **711.** The SAPIs **711** and **712** can provide a set of primitives that the SLEE **710** requires to facilitate call flow and dialogs. The DM **730** interfaces with the CSM **720** via an application program interface (API) **713** for setting up sessions with the media server **120** for initiating dialogs.

The SIP Adapter **740** interprets SIP messages sent to the application server **110** over the network **101** and presents the signaling message to the CSM **720.** The SIP Adaptor **740** can also construct SIP messages received from the CSM **720** to be sent over the network **101.** The SIP Adaptor **740** is coupled to the CSM **720** via interface **714.** The SIP Access Layer **750** parses incoming SIP messages from the network **101** from packets conforming to, for example, User Datagram Protocol (UDP), Transmission Control Protocol (TCP), Stream Control Transmission Protocol (SCTP), and/or other transport protocols. The SIP Access Layer **750** can also provide encapsulation of outgoing SIP messages in, for example, packets conforming to UDP, TCP, SCTP, and/or other transport protocols. The SIP Access Layer **750** can also customize and/or manipulate the format of incoming and/or outgoing SIP messages. Customization and/or manipulation can be useful in interworking scenarios where different SIP agents use different SIP formats. The SIP Adaptor **740** and the SIP Access Layer **750** shields the CSM **720** from the protocol level details of SIP. The SIP Adapter **740** and the SIP Access Layer **750** also form the forwarding and receiving engine for SIP messages.

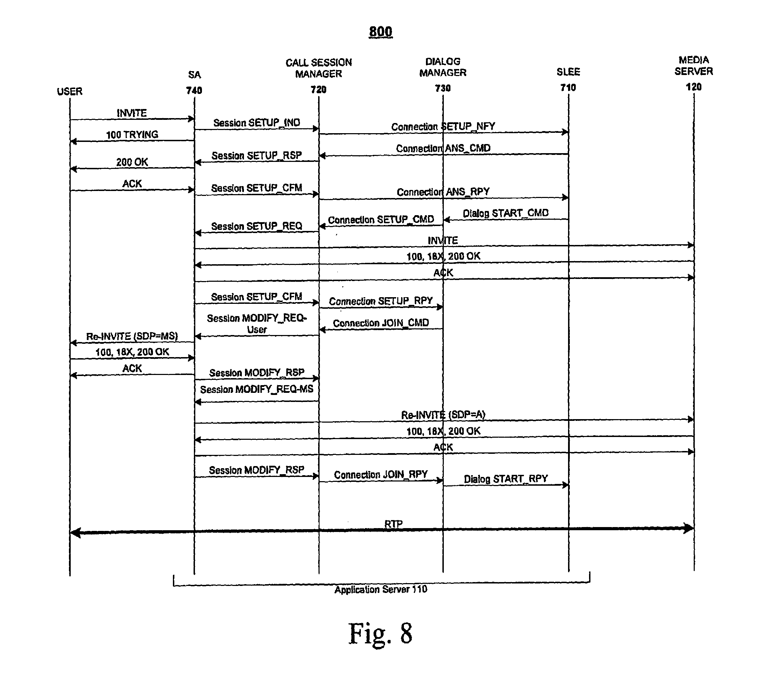

FIG. 8 illustrates a call flow **800** depicting the execution of a telephony service application for setting up a call between a user, e.g., **165,** and a media server **120.** The call can be, for example, a user wishing to access information in a database. The elements of the call flow **800** are described using signaling messages based on SIP, the components of the application server **110** of FIG. 7, and the exemplary network **100** of FIG. 1. However, other signaling protocols can also be used. The ladder diagram begins when a user sends an INVITE message to the application server **110.** The INVITE message is received by the SIP Adapter **740.** The SIP Adapter **740** interprets the INVITE message and sends a session setup indication message to the CSM **720** containing the relevant information obtained from the INVITE message. The SIP Adaptor **740** sends a **100** TRYING message to the user. The CSM **720** sends a connection setup notification message to the SLEE **710.** The SLEE **710** determines from the connection setup notification message what application is required (e.g., a particular CCXML document) and retrieves the relevant application from an appropriate database (not shown), e.g., a web server using HTTP. The SLEE **710** sends a connection answer command message to the CSM **720.** The CSM **720** sends a session setup response message to the SIP Adapter **740.** The SIP Adapter **740** sends a 200 OK message to the user to inform the user that the application server **110** successfully retrieved the relevant telephony service application. The user sends an ACK message to the SIP Adapter **740.** The SIP Adaptor **740** sends a session setup confirmation message to the CSM **740.** The CSM **740** sends a connection answer reply message to the SLEE **710.** The call flow defined and controlled by the telephony service application being executed by the SLEE **710** determines that a dialog application is required and sends a dialog start command message to the DM **730.** The DM **730** determines that the dialog application (e.g., a VXML document) is available at a media server **120.** The DM **730** sends a connection setup command message to the CSM **720** to request that a connection be made with the media server **120.** The CSM **720** sends a session setup request message to the SIP Adaptor **740.** The SIP Adaptor **740** sends an INVITE message to the media server **120.** The media server **120** sends a 200 OK message to the SIP Adaptor **740** to inform the application server **110** that the relevant telephony service application was successfully retrieved. The SIP Adaptor **740** sends an ACK message to the media server **120.** The SIP Adaptor **740** sends a session setup confirmation message to the CSM **720.** The CSM **720** sends a connection setup reply message to the DM **730.** The DM **730** determines that a connection between the user and the media server **120** should be established. The DM **730** sends a connection join command message to the CSM **720.** The CSM **720** sends a session modify request message to the SIP Adaptor **740** requesting to join the user. The SIP Adaptor **740** sends an INVITE message, with Session Description Protocol (SDP) indicating the media server **120,** to the user. The user sends a 200 OK message to the SIP Adaptor **740.** The SIP Adaptor **740** sends an ACK message to the user. The SIP Adaptor **740** sends a session modify response message to the CSM **720.** The CSM **720** sends a session modify request message to the SIP Adaptor **740** requesting to join the media server **120.** The SIP Adaptor **740** sends an INVITE message, with Session Description Protocol (SDP) indicating the user, to the media server **120.** The media server **120** sends a 200 OK message to the SIP Adaptor **740.** The SIP Adaptor **740** sends an ACK message to the media server **120.** The SIP Adaptor **740** sends a session modify response message to the CSM **720.** The CSM **720** sends a connection join reply message to the DM **730.** The DM **730** sends a dialog start reply to the SLEE **710** indicating that a dialog interaction between the user and the media server 120 has commenced. The user exchanges information with the media server **120** using, for example, Real-time Transfer Protocol (RTP).

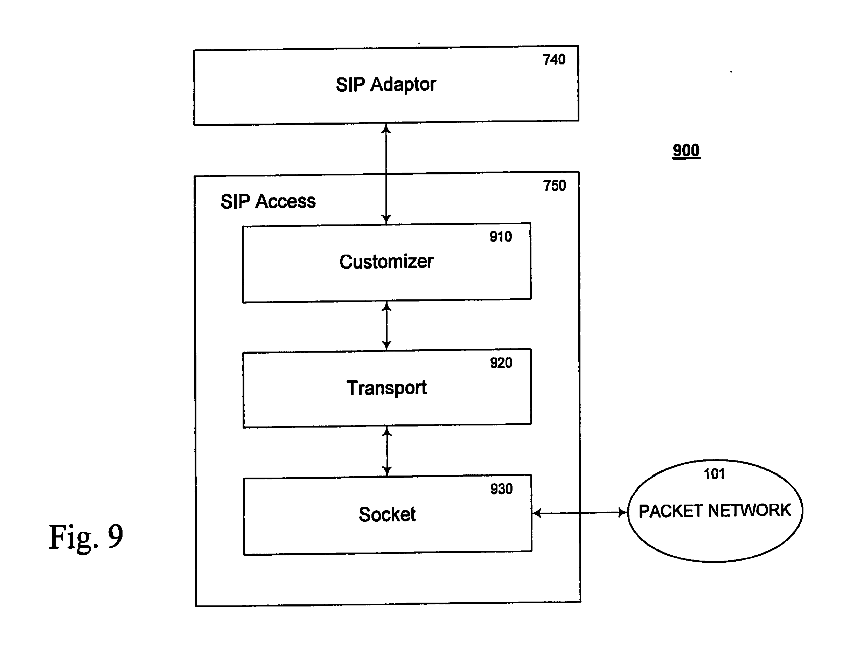

FIG. 9 is a block diagram showing the components of the SIP Access Layer **750** of FIG. 7. The SIP Access Layer **750** includes a SIP Customizer **910,** a Transport Layer **920,** and a Socket Interface **930.** The Socket Interface **930** can provide socket layer functionality to send and receive SIP messages encapsulated in packets to and from the packet network **101.** The Socket Interface **930** can provide physical layer services for UDP, TCP, SCTP, and/or other transport protocols. One SIP message can be sent or received as a UDP packet or as one or more TCP packets, because TCP is a stream based transport protocol. The Transport Layer **920** can form packets from outgoing SIP messages received from the SIP Customizer **910** and pass them on to the Socket Interface **930** for transmission over the packet network **101.** The Transport Layer **920** can also identify message boundaries from incoming SIP messages received from the Socket Interface **930** encapsulated in one or more packets. The incoming SIP message can be collected in a buffer, which is passed to and received by the SIP Customizer **910.** In addition to the incoming SIP message, the Transport Layer **920** can pass additional parameters associated with the SIP message to the SIP Customizer **910.** The SIP Customizer **910** can also receive outgoing SIP messages from the SIP Adaptor **740** to be sent out on the packet network **101.** Parameters associated with the SIP message can include: an IP address (source and/or destination), an IP port number, a connection ID (TCP only), a SIP Method, and/or other SIP parameters. A SIP Method can include: INVITE, RE-INVITE, REGISTER, ACK, CANCEL, BYE, OPTIONS, INFO, NOTIFY, SUBSCRIBE, UNSUBSCRIBE, UPDATE, MESSAGE, REFER, PRACK, PUBLISH, other SIP message types, or any combination thereof.

The SIP Customizer **910** can transform incoming and/or outgoing SIP messages from one format to another format using, for example, scripts comprising one or more instructions. Incoming SIP messages are received by the SIP Customizer **910** from the Transport Layer **920** and outgoing SIP messages are received by the SIP Customizer **910** from the SIP Adaptor **740.** The elements of a SIP message can comprises a first line, one or more headers, and a body portion. In interworking scenarios, some end agents and/or vendors may implement different formats for any of the elements of a SIP message. End agents receiving a SIP message in an unrecognized format can result in an error in processing of the signaling message. Message customization in interworking scenarios allows the end agents, regardless of what format they use for SIP messages, to facilitate interoperability with each other. Message customization using scripts is advantageous because system design is greatly simplified compared to changing code at the SIP protocol level itself. The simplicity of using scripts also allows for quicker development, testing, and/or market delivery of SIP processing systems. Scripts can include, for example, Practical Extraction and Report Language (PERL), Tool Command Language (TCL), C, C++, and/or other programming languages. SIP customization using scripts also allows for fast development, because scripts can easily be created. Scripts adapted for string manipulation (e.g., PERL) are especially adapted for SIP customization, because SIP is a text-based protocol. In addition, scripts provide more flexibility to users (e.g., service providers), because they can change and/or add scripts for SIP customization in interworking scenarios instead of waiting for the release of a patch. SIP customization can also allow SIP parameters and message bodies useful for the delivery of specialized applications to be inserted into or extracted from SIP messages.

The SIP Customizer **910** can use a set of one or more rules and/or criterion to determine what script to use to transform the received SIP message. The rules and/or criterion can be stored in a database. The rules can be based on one or more parameters of a SIP message and/or whether the SIP message is incoming or outgoing. An example association of rules and scripts is illustrated in the table below.

| | Incoming | | Outgoing | |
|---|---|---|---|---|
| Rules | Criterion | Script | Criterion | Script |
| 10.1.1.1 | InCr_IP1.pl | InSc_IP1.pl | OutCr_IP1.pl | OutSc_IP1.pl |
| 10.1.1.2 | InCr_IP2.pl | InSc_IP2.pl | OutCr_IP2.pl | OutSc_IP2.pl |
| 10.1.1.3 | INVITE | InSc_IP3.pl | INVITE | OutSc_IP3.pl |

In this example, pre-configured rules and scripts have been created to facilitate interoperability with end agents with IP addresses of 10.1.1.1, 10.1.1.2, and 10.1.1.3. For example, the service provider is aware that these agents use a SIP vendor implementing a different format for their SIP messages. The rules are defined based on the incoming and/or outgoing IP address associated with the SIP message. When, for example, a SIP message comes from the end agent with IP address 10.1.1.1, the SIP Customizer **910** processes the SIP message with the incoming criterion file InCr_IP1.pl. The criterion files can be, for example, another rule such as a SIP Method or can also be a script based on PERL. The incoming criterion file can determine, based on further parameters associated with the SIP message, which script is applicable for message customization. In this example, the incoming script file InSc_IP1.pl is retrieved and the SIP message is customized using this file. After a SIP message has been transformed into a format recognizable by the SIP Adaptor **740,** the incoming SIP message is passed to the SIP Adaptor **740.** Likewise, outgoing SIP messages destined for 10.1.1.1 can be transformed by the SIP Customizer **910** into the format used by the SIP agent at 10.1.1.1 and passed to the Transport Layer **920.**

Another example association of rules and scripts using the information described above is illustrated in the table below.

| Field | Definition | |
|---|---|---|
| Name Description | The name for the Message Customization object A text field to describe the object | |
| IP Address | Defines the source or destination IP address/netmask for incoming or outgoing messages | |
| Port Number | Defines the source or destination port for an incoming or outgoing message. Start matching | |
| | with port can be done by specifying port number as 0. | |
| SIP Method | Select the SIP method to which this message customization a pplies. Possible selections | |
| | are: | |
| | INVITE | SIP/2.0 |
| | INFO | CANCEL |
| | OPTIONS | BYE |
| | ACK | SUBSCRIBE |
| | NOTIFY | REFER |
| | SIP ALL | |
| Message Direction | Define whether this is an Incoming or Outgoing message customization. | |
| Script Name | The name of the message customization script. | |

In this example, a customization object is defined, including a name field, an optional description field, one or more rules (e.g., IP address), and the name of the corresponding script for customizing the SIP message.

Below is a sample SIP message that conforms to a first format. The SIP message corresponds to a received SIP INVITE message, wherein the SIP message erroneously indicates that the voice path between the two parties is inactive.

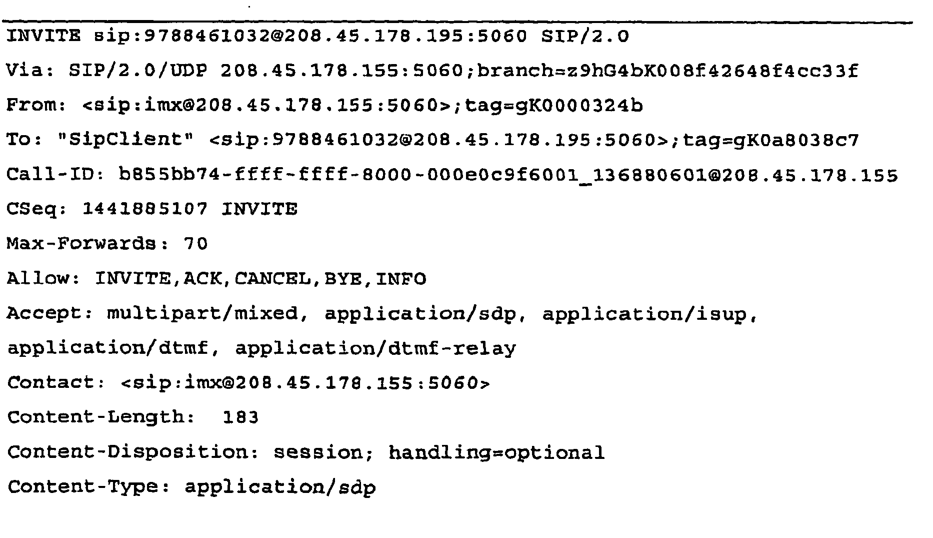

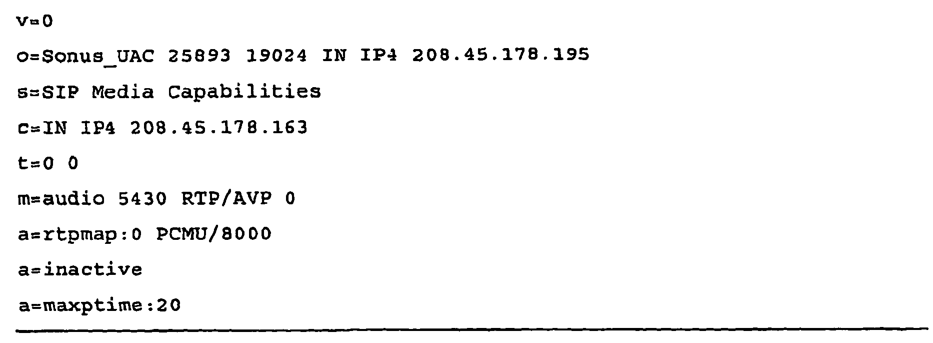

The SIP message illustrated above can be customized to produce a target SIP message conforming to a second format, illustrated below. In this case, a customization script can recognize the erroneous inactivation of the voice path and re-enable the path.

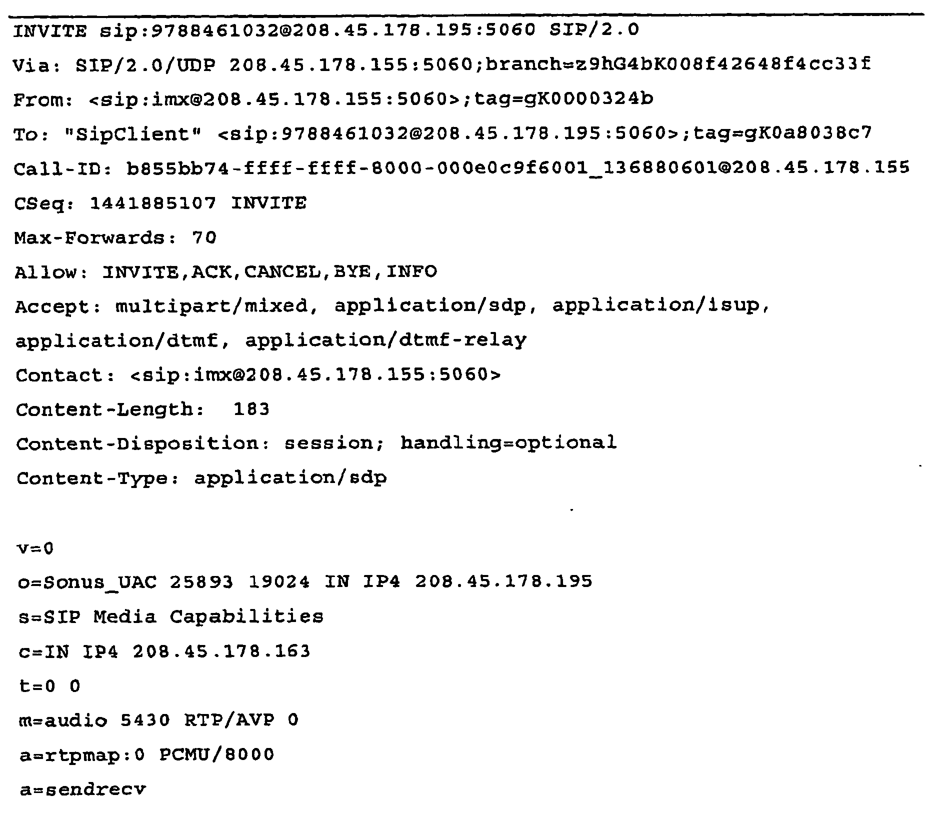

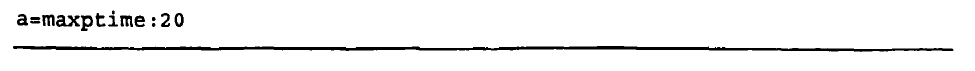

The customization script used in the above illustrations can be a PERL script as shown below.

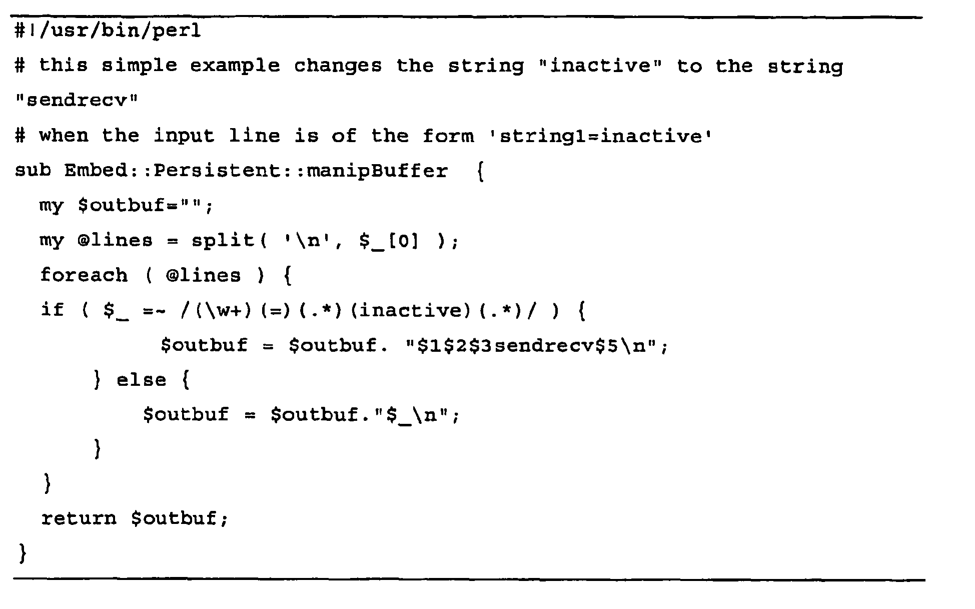

The above-described techniques can be implemented in digital electronic circuitry, or in computer hardware, firmware, software, or in combinations of them. The implementation can be as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and the computer program can be deployed in any form, including as a stand-alone program or as a subroutine, element, or other unit suitable for use in a computing environment. A computer program can be deployed to be executed on one computer or on multiple computers at one site.

Method steps can be performed by one or more programmable processors executing a computer program to perform functions of the invention by operating on input data and generating output. Method steps can also be performed by, and an apparatus can be implemented as, special purpose logic circuitry, e.g., an FPGA (field programmable gate array) or an ASIC (application-specific integrated circuit). Subroutines can refer to portions of the computer program and/or the processor/special circuitry that implements that functionality.

Processors suitable for the execution of a computer program include, by way of example, both general and special purpose microprocessors, and any one or more processors of any kind of digital computer. Generally, a processor receives instructions and data from a read-only memory or a random access memory or both. The essential elements of a computer are a processor for executing instructions and one or more memory devices for storing instructions and data. Generally, a computer also includes, or be operatively coupled to receive data from or transfer data to, or both, one or more mass storage devices for storing data, e.g., magnetic, magneto-optical disks, or optical disks. Data transmission and instructions can also occur over a communications network. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the above described techniques can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer (e.g., interact with a user interface element). Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The above described techniques can be implemented in a distributed computing system that includes a back-end component, e.g., as a data server, and/or a middleware component, e.g., an application server, and/or a front-end component, e.g., a client computer having a graphical user interface and/or a Web browser through which a user can interact with an example implementation, or any combination of such back-end, middleware, or front-end components. The components of the system can be interconnected by any form or medium of digital data communication, e.g., a communication network. Examples of communication networks include a local area network ("LAN") and a wide area network ("WAN"), e.g., the Internet, and include both wired and wireless networks.

The computing system can include clients and servers. A client and a server are generally remote from each other and typically interact through a communication network. The relationship of client and server arises by virtue of computer programs running on the respective computers and having a client-server relationship to each other.

Scope of the invention is defined by the appended claims, rather than by the foregoing description.

### Attachment A

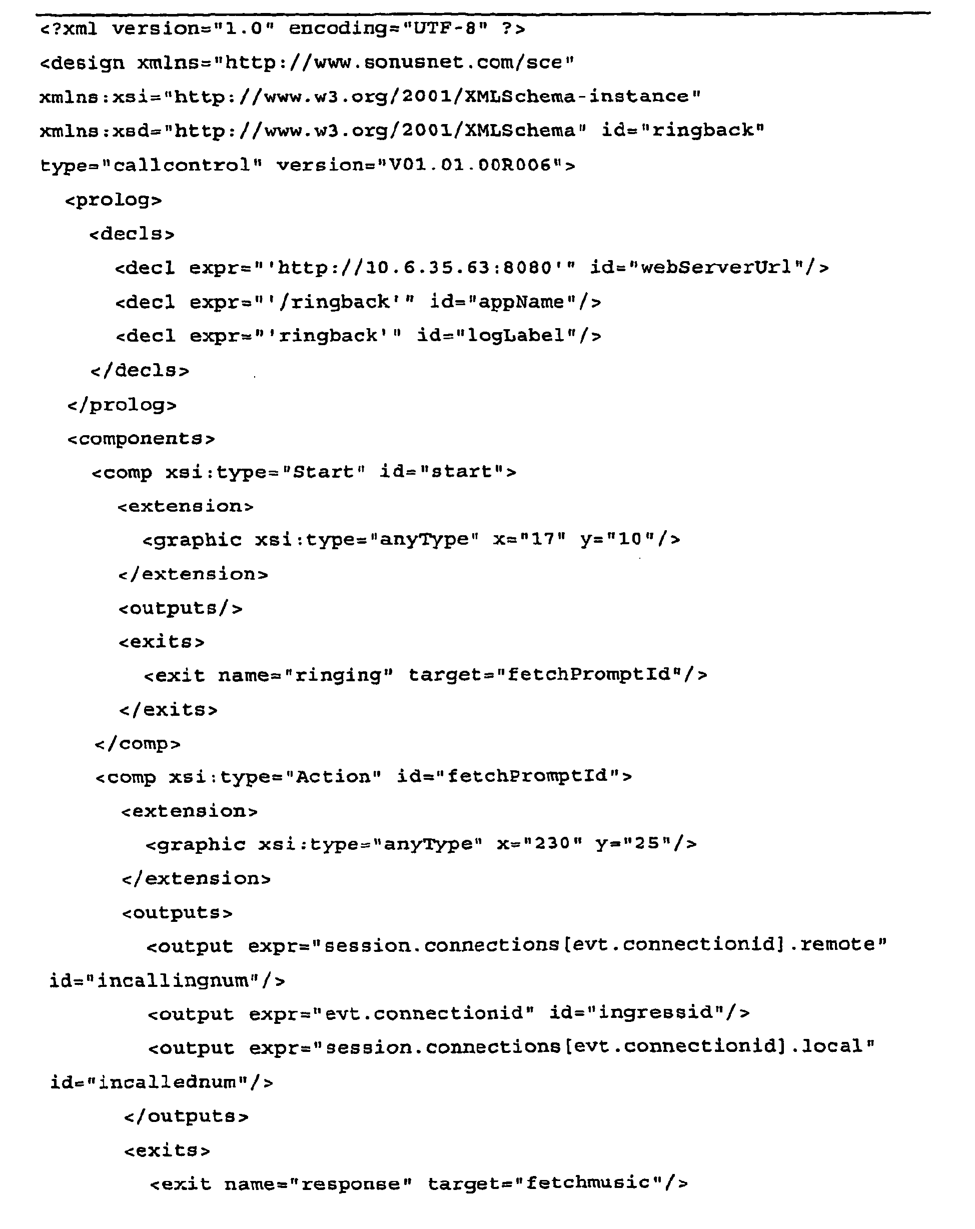

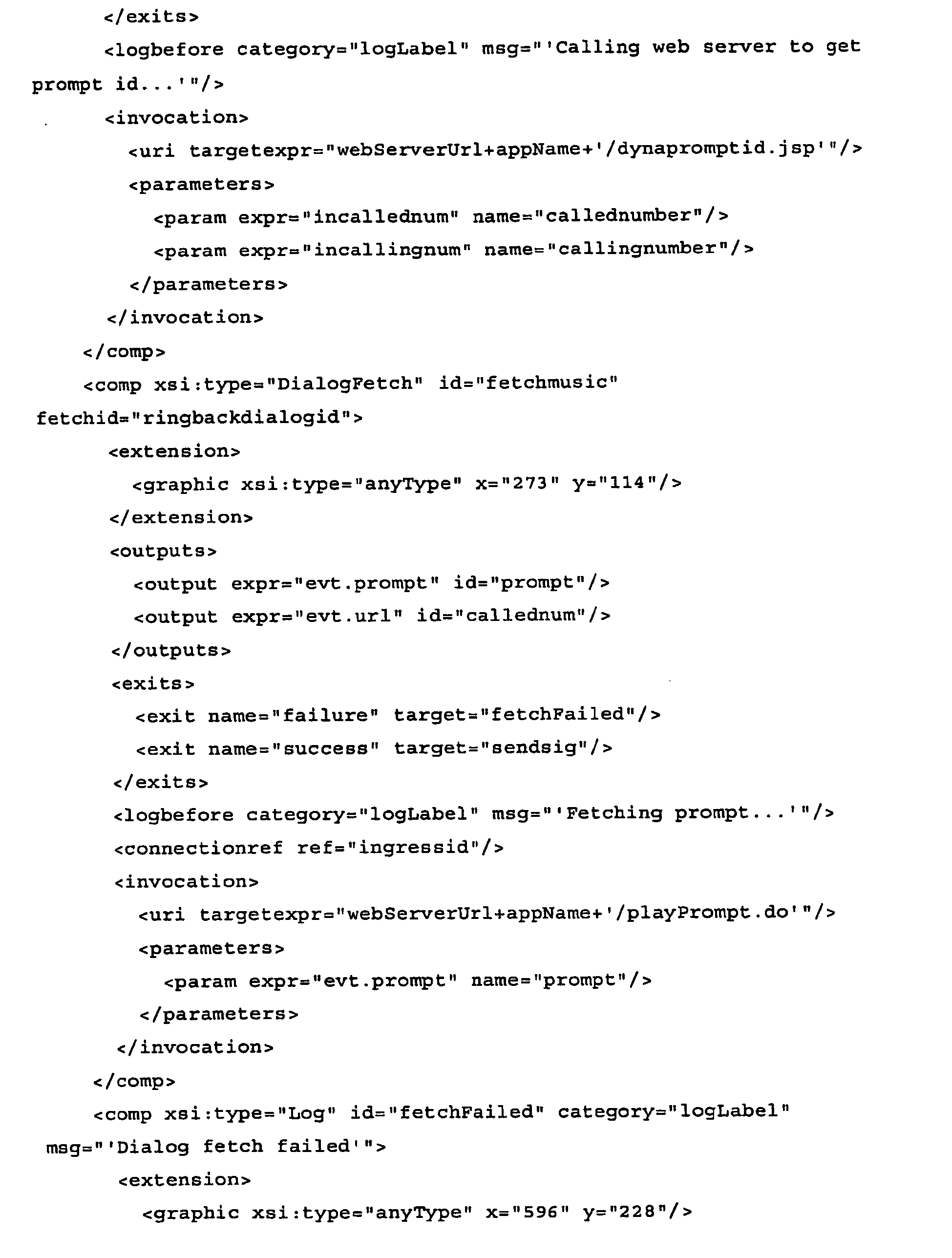

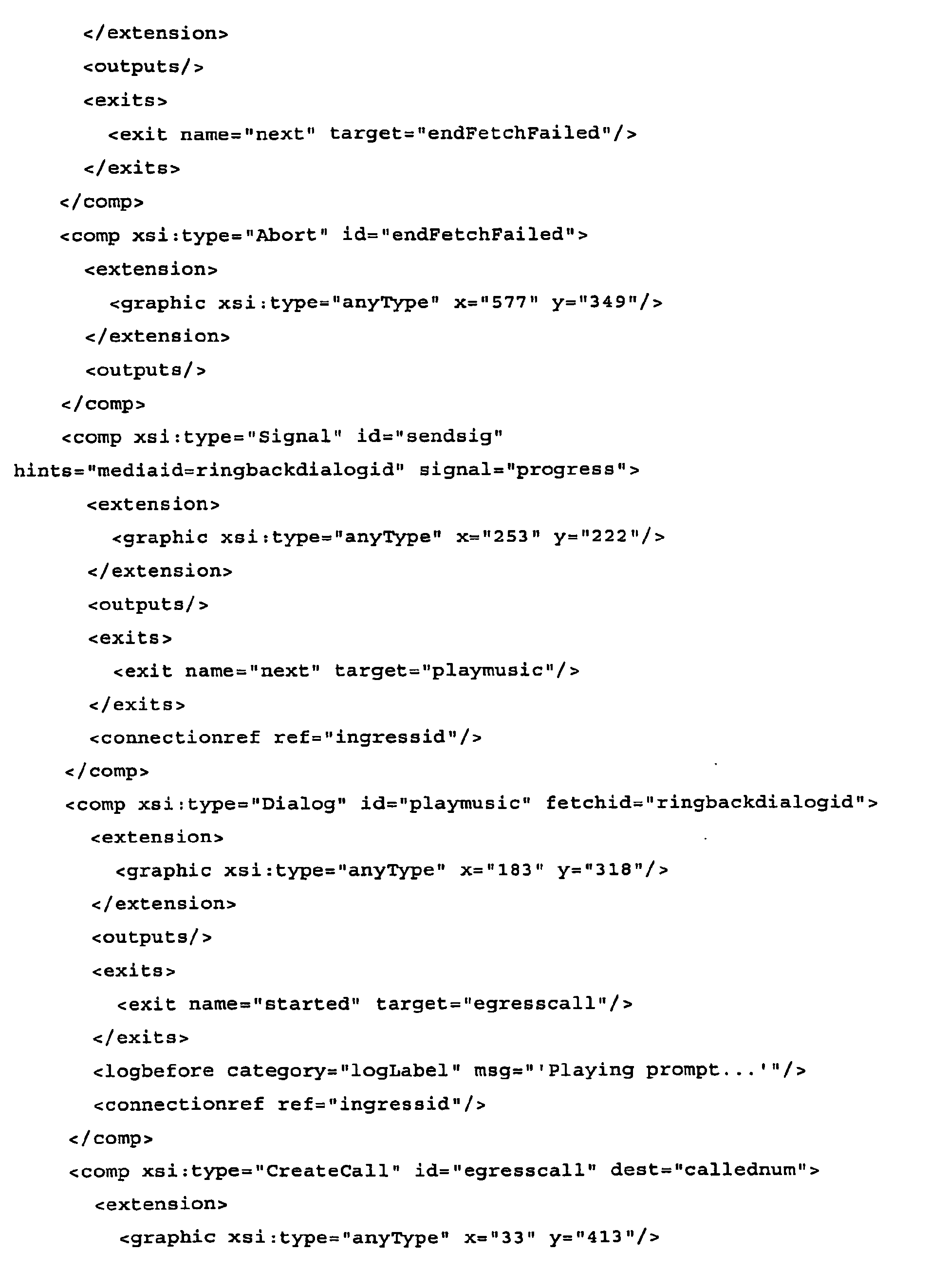

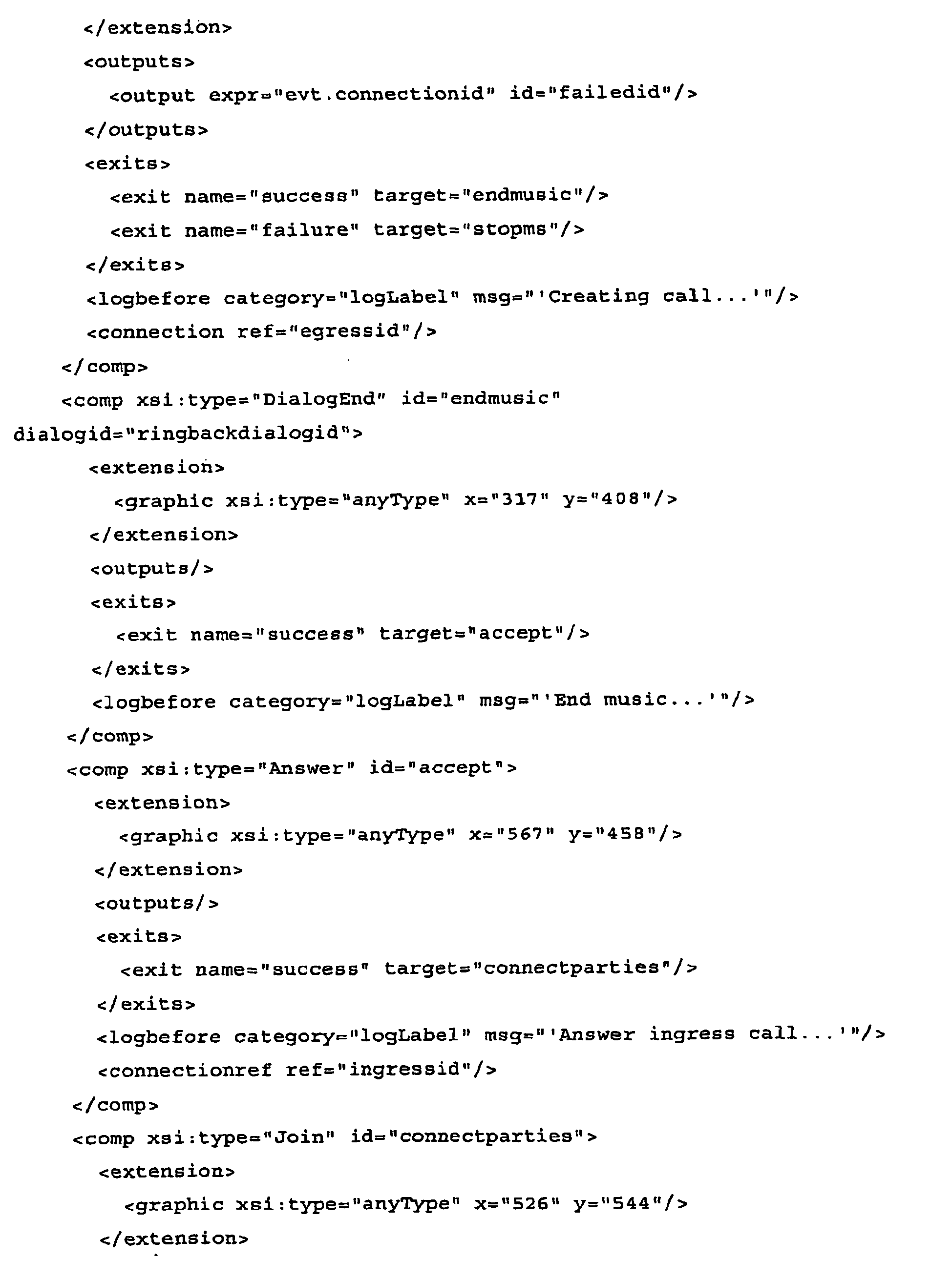

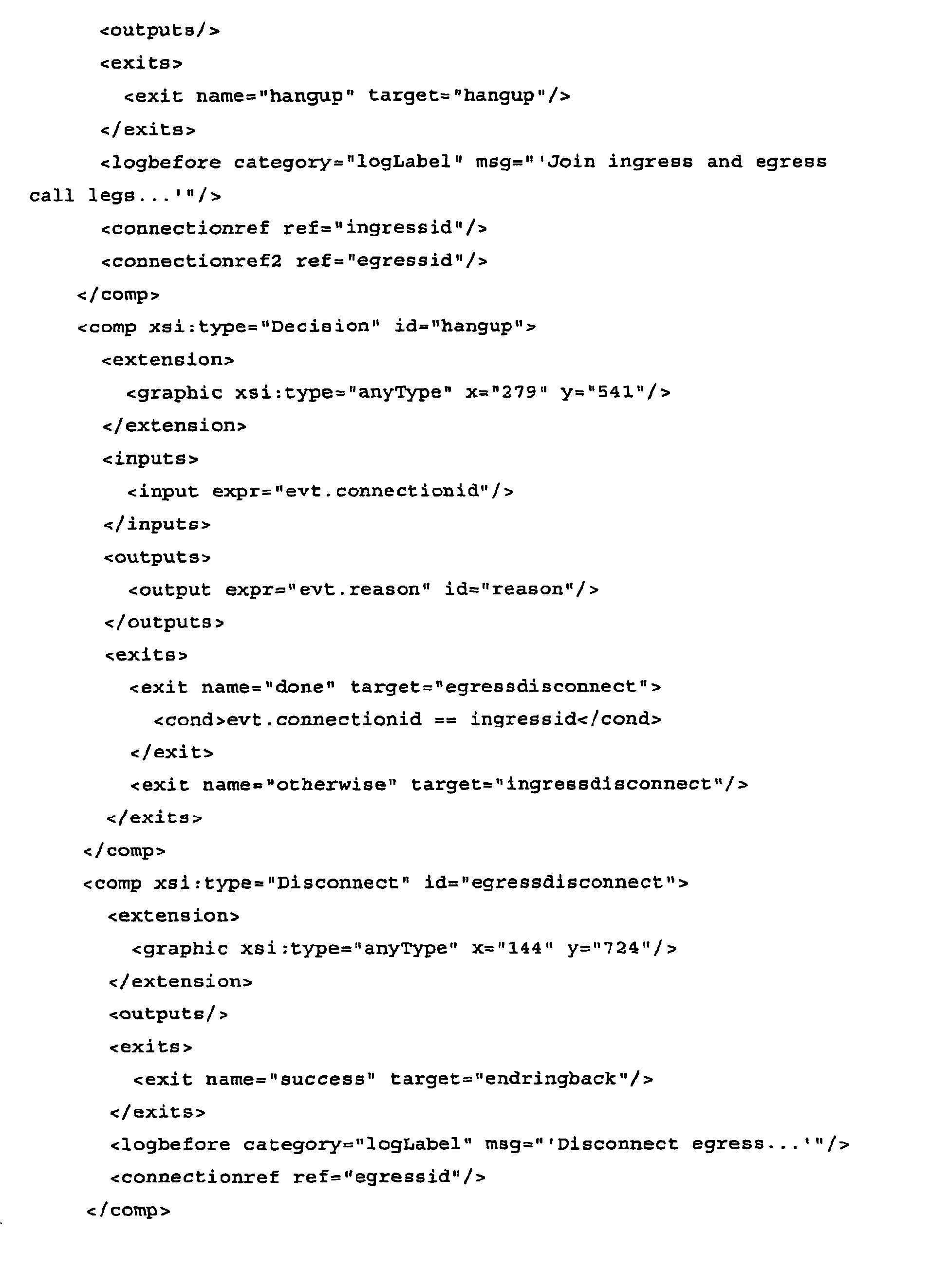

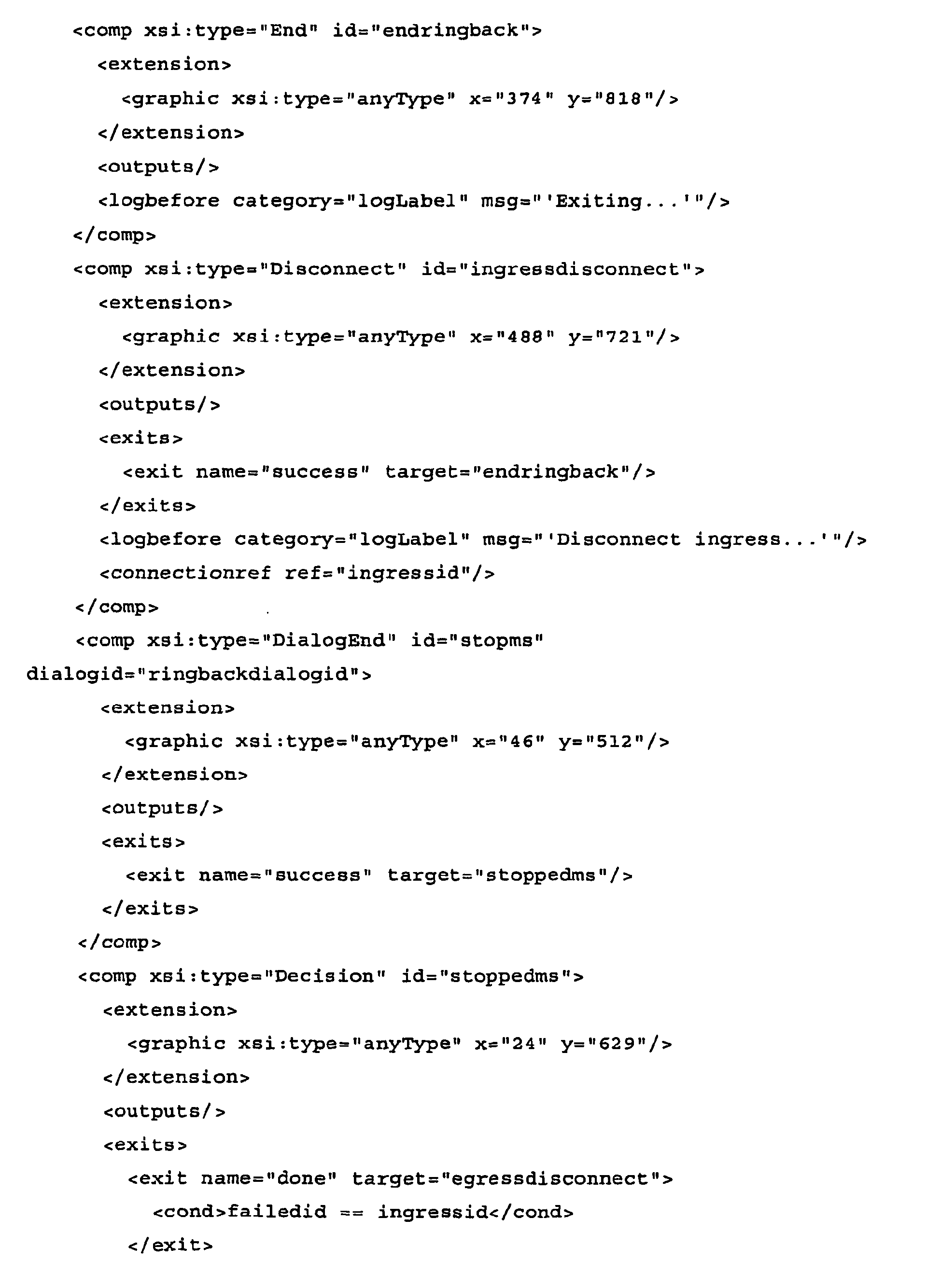

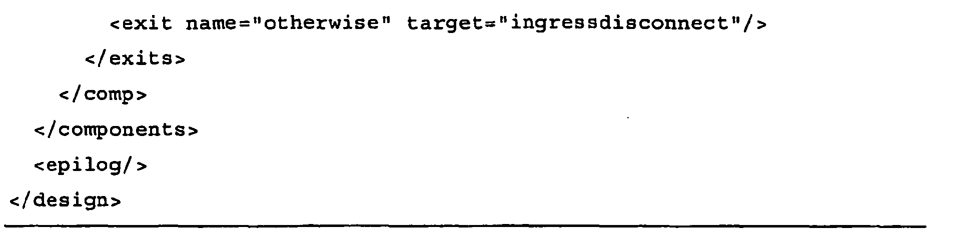

### Attachment B

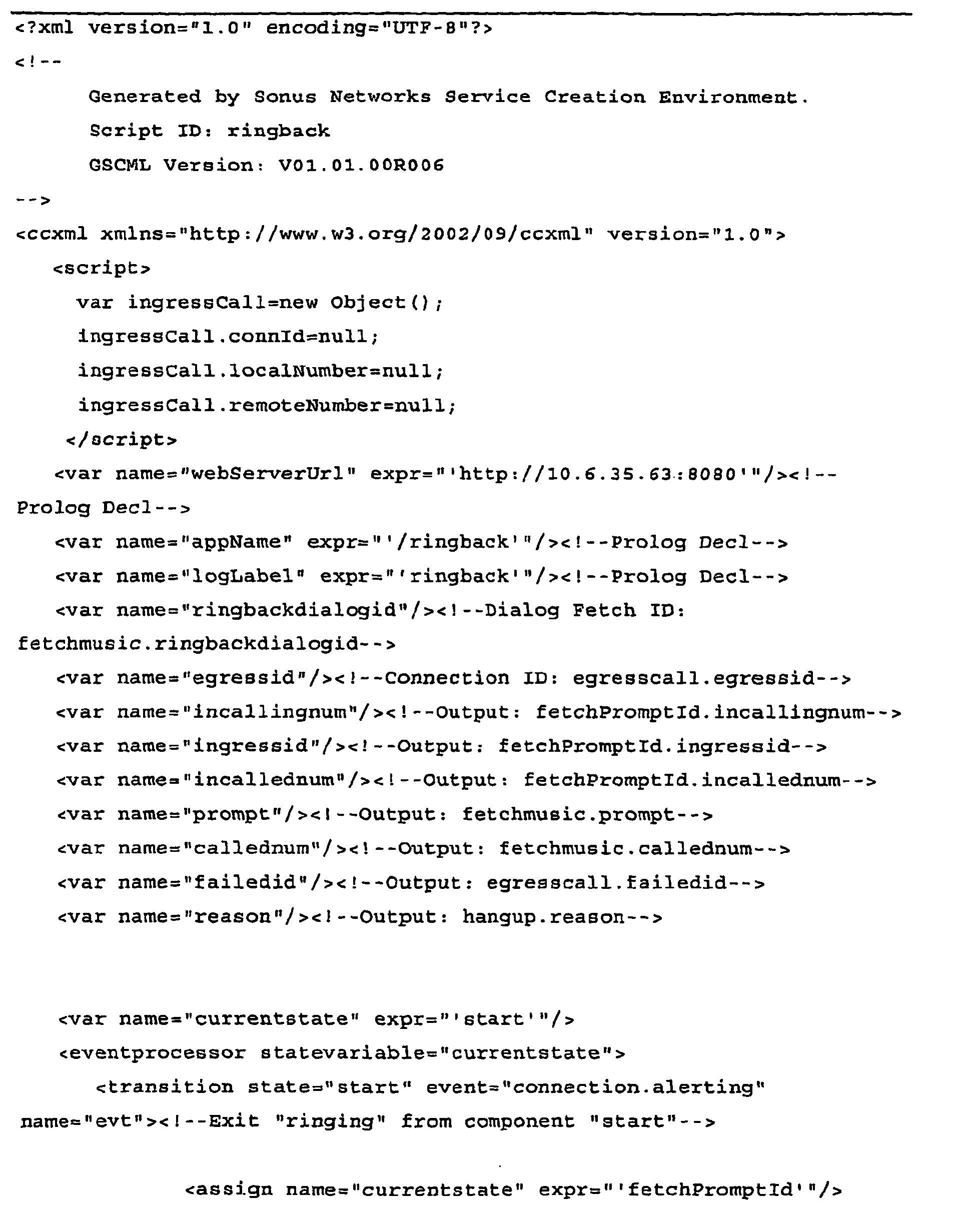

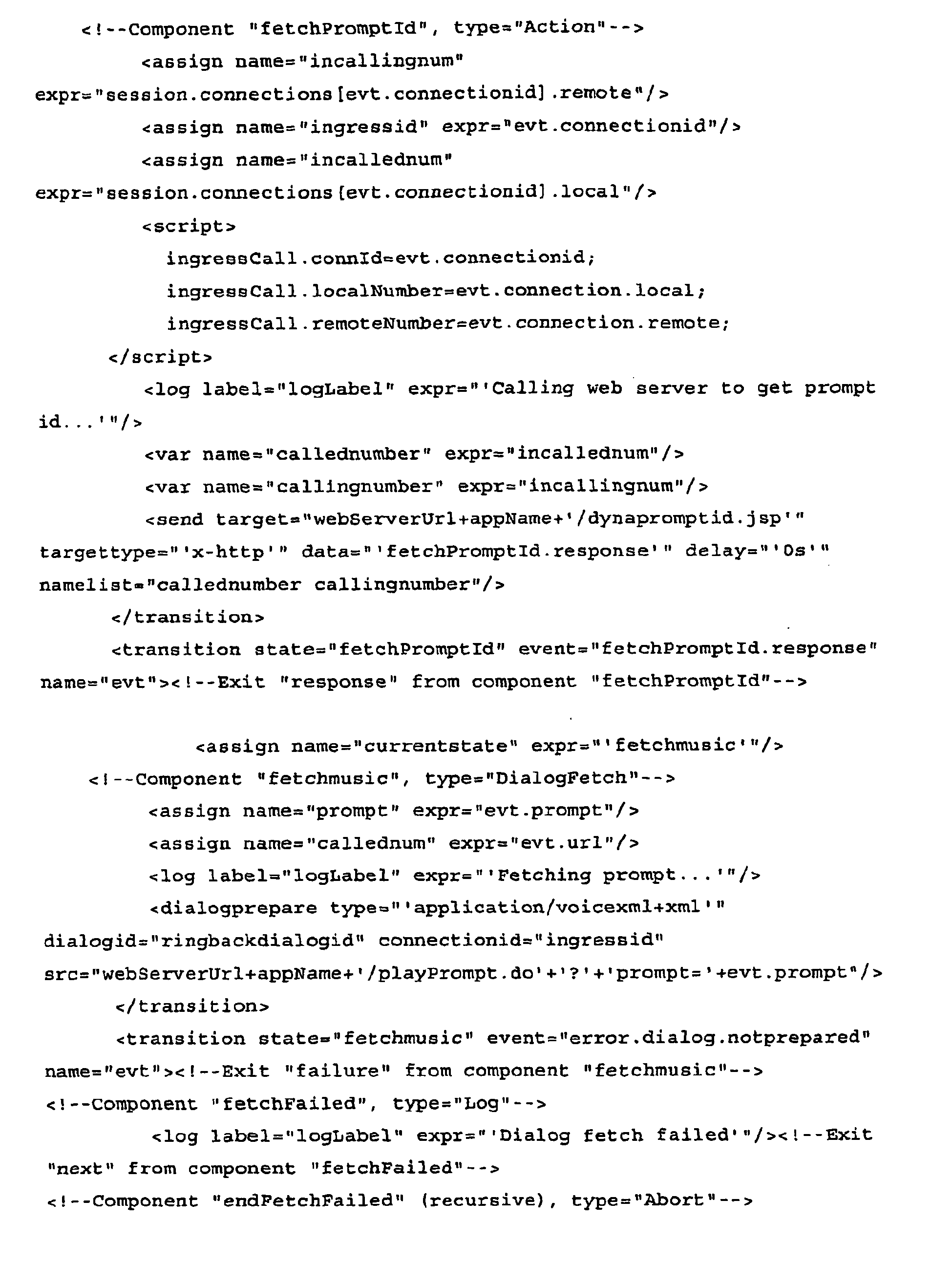

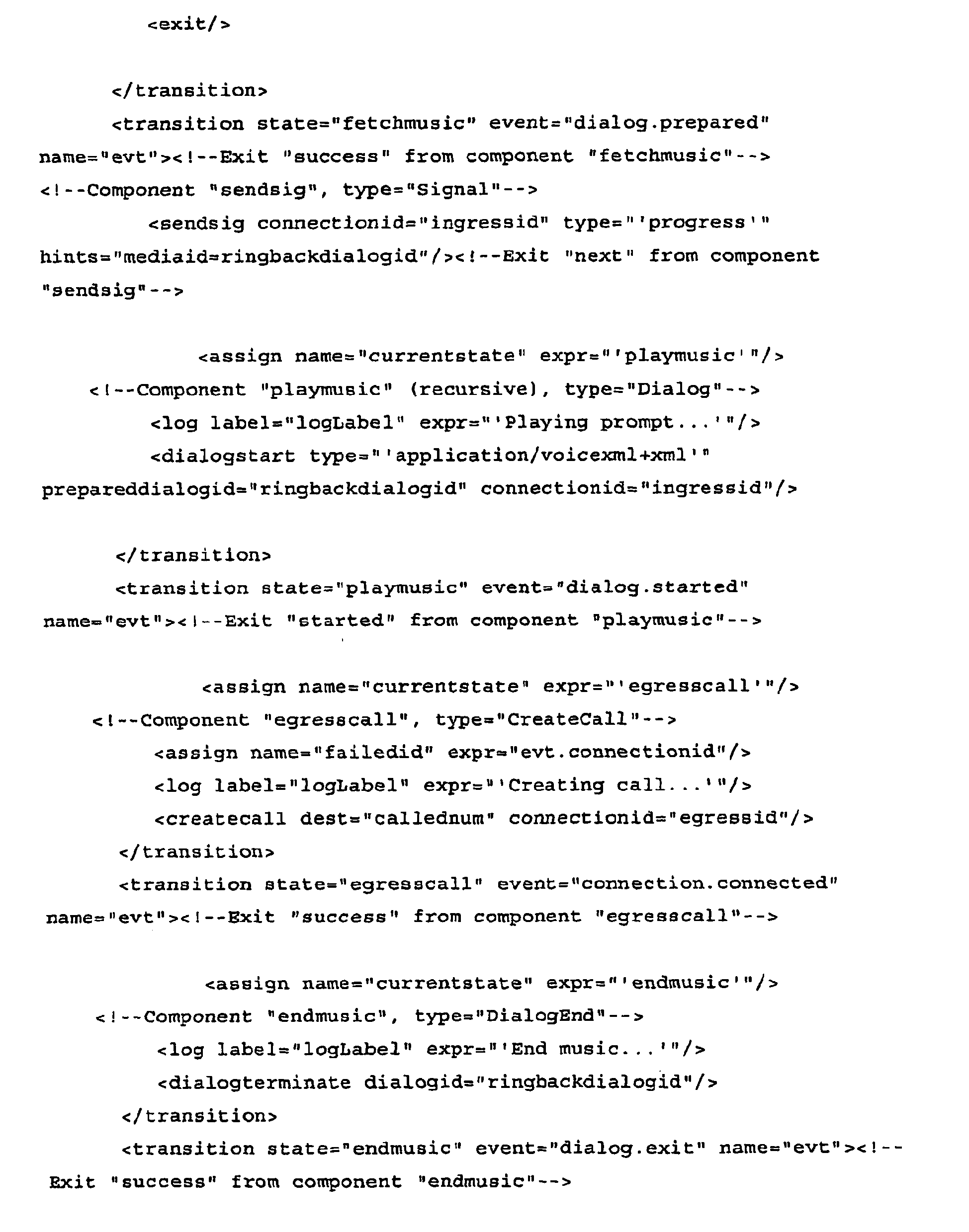

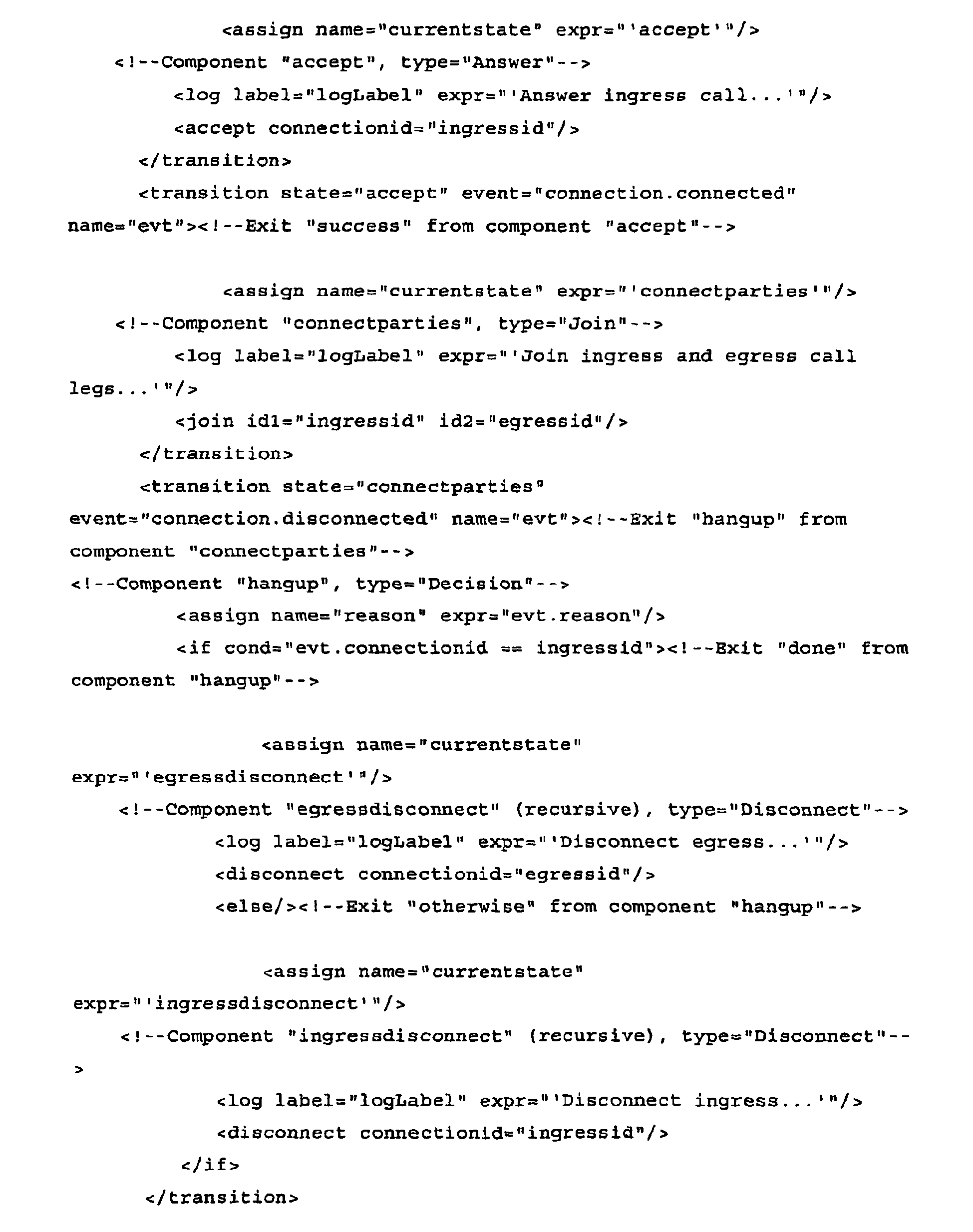

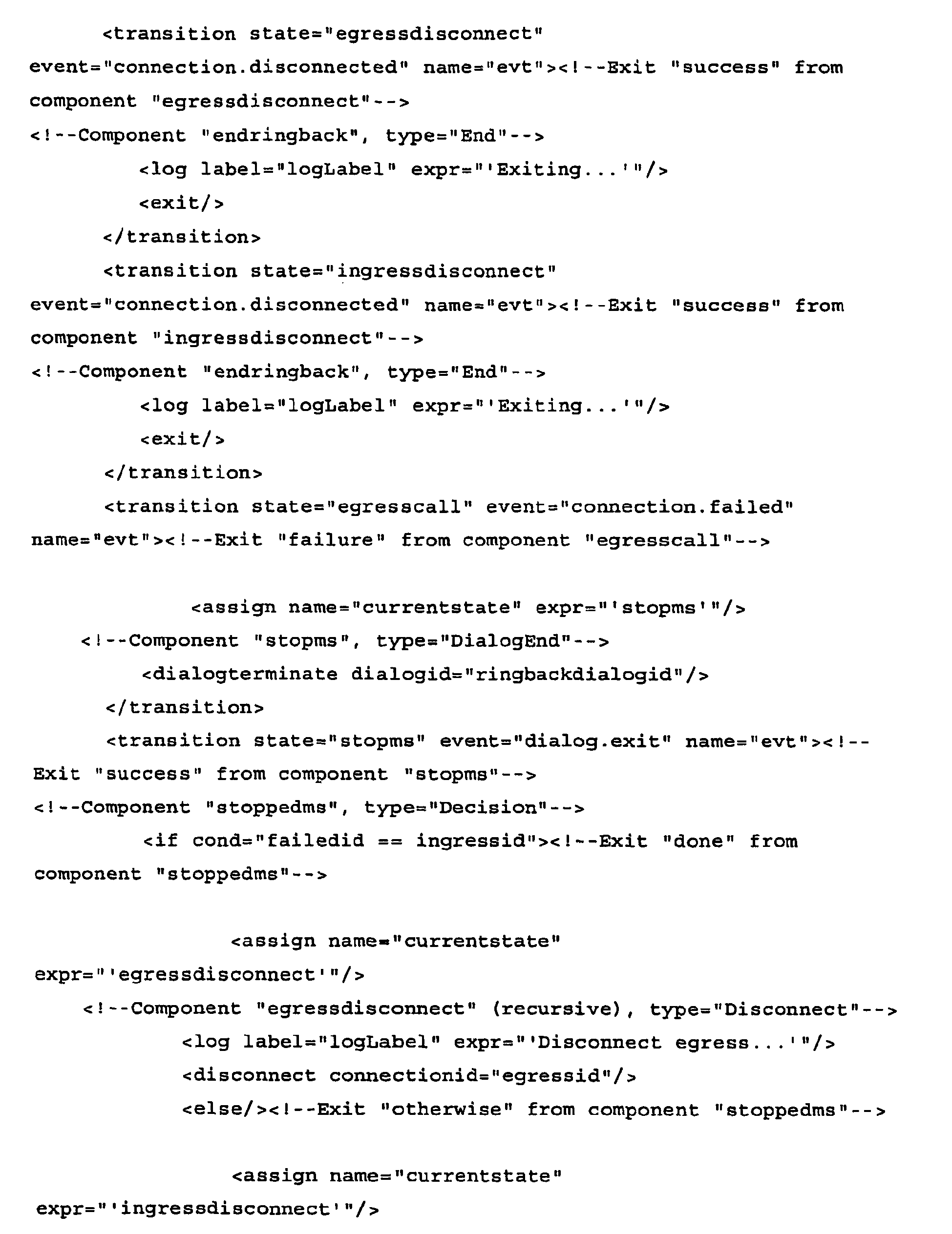

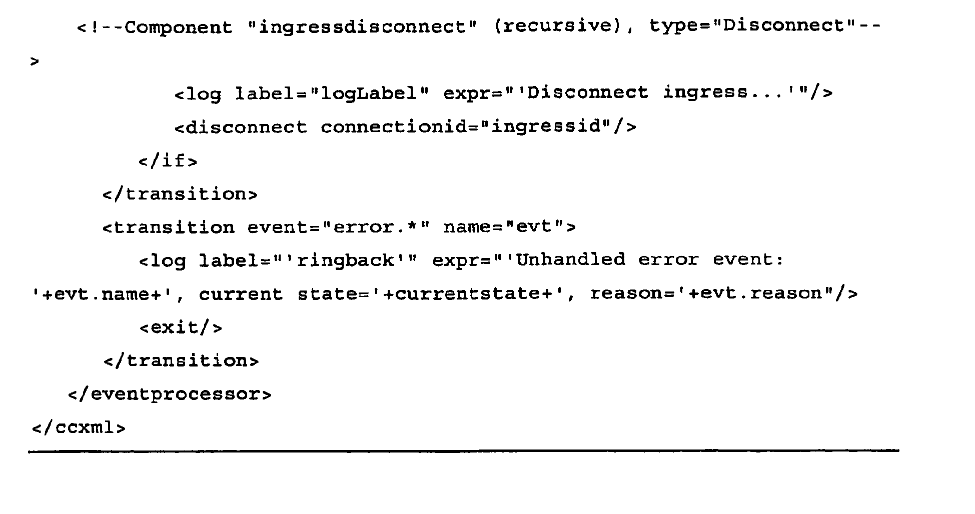

### Attachment C

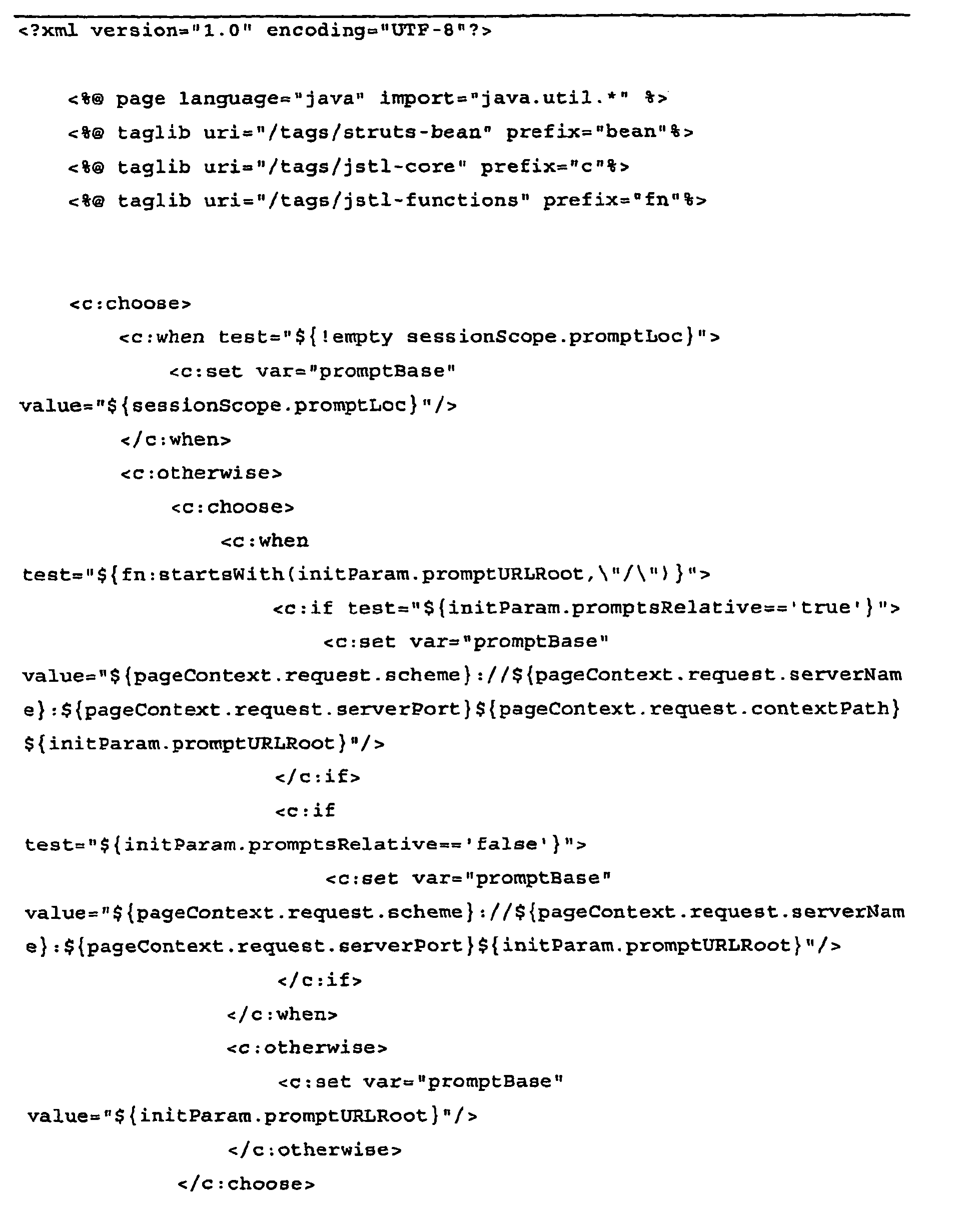

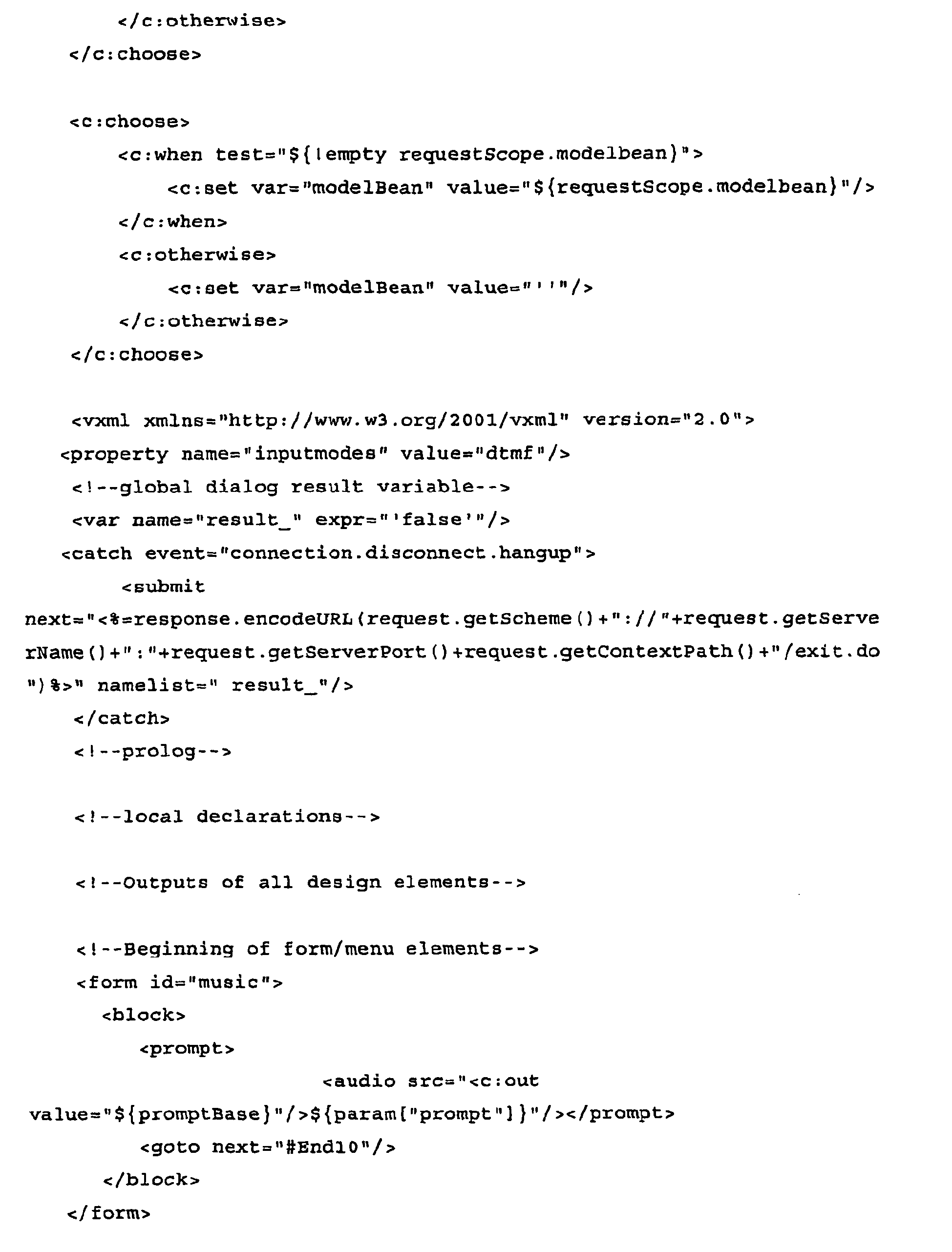

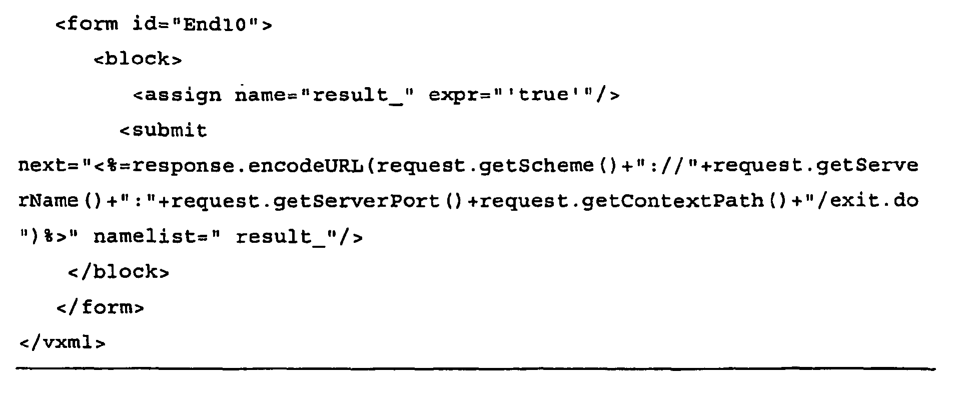

## Claims

1. A method for generating an integrated call control and dialog application comprising:
providing a graphical user interface (600);
selecting on the graphical user interface (600) an
element from a plurality of elements (511, 512, 513, 514, 521, 522, 523, 524, 525, 526, 527, 531, 532, 533, 534, 535, 536) the plurality of elements (511, 512, 513, 514, 521, 522, 523, 524, 525, 526, 527, 531, 532, 533, 534, 535, 536) including at least one call control element (511, 512, 513, 514, 521, 522, 523, 524, 525, 526, 527) and at least one dialog elements (531, 532, 533, 534, 535, 536), the **characterised in that** at least one call control element (511, 512, 513, 514, 521, 522, 523, 524, 525, 526, 527), defining control of at least one call event associated with the at least one dialog element (531, 532, 533, 534, 535, 536); and
generating from at least once call ontrol element (511, 512, 513, 514, 521, 522, 523, 524, 525, 526, 527) and at least one dialog element (531, 532, 533, 534, 535, 536) a module for telephony applications using the graphical user interface (600).

2. The method of claim 1, further comprising coupling, using the graphical user interface (600), the dialog element (531, 532, 533, 534, 535, 536) with the call control element (511, 512, 513, 514, 521, 522, 523, 524, 525, 526, 527).

3. The method of claim 1, wherein the plurality of elements (511, 512, 513, 514, 521, 522, 523, 524, 525, 526, 527) comprise one or more of: a design file, source code, an executable file, or any combination thereof.

4. The method of claim 1, wherein the call control element (511, 512, 513, 514, 521, 522, 523, 524, 525, 526, 527) is based on: Call Control XML - CCXML, Call Professing Language - CPL, or any combination thereof.

5. The method of claim 1, further comprising providing a set of one or more predefined call control elements (511, 512, 513, 514, 521, 522, 523, 524, 525, 526, 527), the call control element (511, 512, 513, 514, 521, 522, 523, 524, 525, 526, 527) being included in the set.

6. The method of claim 1, wherein the dialog element (531, 532, 533, 534, 535, 536) is based on: Voice XML - VXML, Media Server Control Markup Language -MSCML, Media Server Markup Language - MSML, Media Objects Markup Language - MOML, or any combination thereof.

7. The method of claim 1, further comprising providing a set of one or more redefined dialog elements (531, 532, 533, 534, 535, 536), the dialog element (531, 532, 533, 534, 535, 536) being included in the set.

8. The method of claim 1, wherein the call control element (511, 512, 513, 514, 521, 522, 523, 524, 525, 526, 527) or the dialog element (531, 532, 533, 534, 535, 536) includes an element based on an ECMA script.

9. The method of claim 1, wherein generating the module comprises configuring the call control element (511, 512, 513, 514, 521, 522, 523, 524, 525, 526, 527) or the dialog element (531, 532, 533, 534, 535, 536).

10. The method of claim 1, wherein generating the module comprises defining a call flow, the call flow including the call control element (511, 512, 513, 514, 521, 522, 523, 524, 525, 526, 527) or the dialog element (531, 532, 533, 534, 535, 536).

11. A computer program product, tangibly embodied in an information carrier, the computer program product including instructions being operable to cause a data processing apparatus tocarry out a method according to any preceding claim 1-10.

12. A system comprising a service creation tool adapted to:
provide a graphical user interface (600);
**characterised in that** the system is adapted to
selecting on the graphical use interface (600) an element from a plurality of elements (511, 512, 513, 514, 521, 522, 523, 524, 525, 526, 527, 531, 532, 533, 534, 535, 536), the plurality of elements (511, 512, 513, 514, 521, 522, 523, 524, 525, 526, 527, 531, 532, 533, 534, 535, 536) including at least one call control element selecting on the graphical user interface (600) and at least one dialog element (531, 532, 533, 534, 535, 536), the at least one call control element (511, 512, 513, 514, 521, 522, 523, 524, 525, 526, 527) defining control of at least one call event associated with the at least one dialog element (531, 532, 533, 534, 535, 536) and
generate from at least one call control element (511, 512, 513, 514, 521, 522, 523, 524, 525, 526, 527) and at least one dialog element (531, 532, 533, 534, 535, 536) a module for telephony applications using the graphical user interface (600).

## Patentansprüche

1. Verfahren zum Erzeugen einer integrierten Rufsteuerungs- und Dialoganwendung, das Folgendes beinhaltet:
Bereitstellen einer grafischen Benutzeroberfläche (600);
Auswählen, auf der grafischen Benutzeroberfläche (600), eines Elementes aus mehreren Elementen (511, 512, 513, 514, 521, 522, 523, 524, 525, 526, 527, 531, 532, 533, 534, 535, 536), wobei die mehreren Elemente (511, 512, 513, 514, 521, 522, 523, 524, 525, 526, 527, 531, 532, 533, 534, 535, 536) wenigstens ein Rufsteuerelement (511, 512, 513, 514, 521, 522, 523, 524, 525, 526, 527) und weinigstens ein Dialogelement (531, 532, 533, 534, 535, 536) beinhalten, **dadurch gekennzeichnet, dass** das wenigstens eine Rufsteuerelement (511, 512, 513, 514, 521, 522, 523, 524, 525, 526, 527) die Steuerung von wenigstens einem Rufereignis definiert, das mit dem wenigstens einen Dialogelement (531, 532, 533, 534, 535, 536) assoziiert ist, und
Erzeugen, von dem wenigstens einen Rufsteuerelement (511, 512, 513, 514, 521, 522, 523, 524, 525, 526, 527) und dem wenigstens einen Dialogelement (531, 532, 533, 534, 535, 536), eines Moduls für Telefonieanwendungen unter Verwendung der grafischen Benutzeroberfläche (600).

2. Verfahren nach Anspruch 1, das ferner das Koppeln des Dialogelementes (531, 532, 533, 534, 535, 536) mit dem Rufsteuerelement (511, 512, 513, 514, 521, 522, 523, 524, 525, 526, 527) unter Verwendung der grafischen Benutzeroberfläche (600) beinhaltet.

3. Verfahren nach Anspruch 1, wobei das Auswählen der mehreren Elemente auf der grafischen Benutzeroberfläche (600) eines oder mehrere der Folgenden beinhaltet: eine Design-Datei, Source-Code, eine ablauffähige Datei oder eine beliebige Kombination davon.

4. Verfahren nach. Anspruch 1, wobei das Rufsteuerelement (511, 512, 513, 514, 521, 522, 523, 524, 525, 526, 527) auf Folgendem basiert: CCXML (Call Control XML), CPL (Call Processing Language) oder eine beliebige Kombination davon.

5. Verfahren nach Anspruch 1, das ferner das Bereitstellen eines Satzes von einem oder mehreren vordefinierten Rufsteuerelementen (511, 512, 513, 514, 521, 522, 523, 524, 525, 526, 527) beinhaltet, wobei das Rufsteuerelement (511, 512, 513, 514, 521, 522, 523, 524, 525, 526, 527) in dem Satz enthalten ist.

6. Verfahren nach Anspruch 1, wobei das Dialogelement (531, 532, 533, 534, 535, 536) auf Folgendem basiert: VXML (Voice XML), MSCML (Media Server Control Markup Language), MSML (Media Server Markup Language), MOML (Media Objects Markup Language) oder eine beliebige Kombination davon.

7. Verfahren nach Anspruch 1, das ferner das Bereitstellen eines Satzes von einem oder mehreren vordefinierten Dialogelementen (531, 532, 533, 534, 535, 536) beinhaltet, wobei das Dialogelement (531, 532, 533, 534, 535, 536) in dem Satz enthalten ist.

8. Verfahren nach Anspruch 1, wobei das Rufsteuerelement (511, 512, 513, 514, 521, 522, 523, 524, 525, 526, 527) oder das Dialogelement (531, 532, 533, 534, 535, 536) ein Element auf der Basis eines ECMA-Slcripts beinhalten.

9. Verfahren nach Anspruch 1, wobei das Erzeugen des Moduls das Konfigurieren des Rufsteuerelementes (511, 512, 513, 514, 521, 522, 523, 524, 525, 526, 527) oder des Dialogelementes (531, 532, 533, 534, 535, 536) beinhaltet

10. Verfahren nach Anspruch 1, wobei das Erzeugen des Moduls das Definieren eines Rufablaufs beinhaltet, wobei der Rufablauf das Rufsteuerelement (511, 512, 513, 514, 521, 522, 523, 524, 525, 526, 527) oder das Dialogelement (531, 532, 533, 534, 535, 536) beinhaltet.

11. Cornputerprogrämmprodukt, das greifbar in einem Informationsträger ausgestaltet ist, wobei das Computerprogrammprodukt Befehle beinhaltet, um ein Datenverarbeitungsgerät zu veranlassen, ein Verfahren nach einem der Ansprüche 1 - 10 auszuführen.

12. System, das ein Service-Creation-Tool umfasst, zum:
Bereitstellen einer grafischen Benutzeroberfläche (600);
**dadurch gekennzeichnet, dass** das System so ausgelegt ist, dass es auf der grafischen Benutzeroberfläche (600) ein Element aus mehreren Elementen (511, 512, 513, 514, 521, 522, 523, 524, 525, 526, 527, 531, 532, 533, 534, 535, 536) auswählt, wobei die mehreren Elemente (511, 512, 513, 514, 521, 522, 523, 524, 525, 526, 527, 531, 532, 533, 534, 535, 536) wenigstens ein Rufsteuerelement (511, 512, 513, 514, 521, 522, 523, 524, 525, 526, 527) und wenigstens ein Dialogelement (531, 532, 533, 534, 535, 536) beinhalten, **dadurch gekennzeichnet, dass** wenigstens ein Rufsteuerelement (511, 512, 513, 514, 521, 522, 523, 524, 525, 526, 527) die Steuerung von wenigstens einem Rufereignis definiert, das mit dem wenigstens einen Dialogelement (531, 532, 533, 534, 535, 536) assoziiert ist; und
Erzeugen, von dem wenigstens einen Rufsteuerelement (511, 512, 513, 514, 521, 522, 523, 524, 525, 526, 527) und dem wenigstens einen Dialogelement (531, 532, 533, 534, 535, 536), eines Moduls für Telefonieanwendungen unter Verwendung der grafischen Benutzeroberfläche (600).

## Revendications

1. Procédé pour générer une application intégrée de commande d'appel et de dialogue comprenant les étapes consistant à
fournir une interface utilisateur graphique (600) ;
sélectionner sur l'interface utilisateur graphique (600) un élément d'une pluralité d'éléments (511, 512, 513, 514, 521, 522, 523, 524, 525, 526, 527, 531, 532, 533, 534, 535, 536), la pluralité d'éléments (511, 512, 513, 514, 521, 522, 523, 524, 525, 526, 527, 531, 532, 533, 534, 535, 536) comprenant au moins un élément de commande d'appel (511, 512, 513, 514, 521, 522, 523, 524, 525, 526, 527) et au moins un élément de dialogue (531, 532, 533, 534, 535, 535), **caractérisé en ce que** le ou les éléments de commande d'appel (511, 512, 513, 514, 521, 522, 523, 524, 525, 526, 527) définissent la commande d'au moins un événement d'appel associé avec le ou les éléments de dialogue (531, 532, 533, 534, 535, 536), et
générer à partir d'au moins un élément de commande d'appel (511, 512, 513, 514, 521, 522, 523, 524, 525, 526, 527) et d'au moins un élément de dialogue (531, 532, 533, 534, 535, 536) un module pour applications téléphoniques utilisant l'interface utilisateur graphique (600).

2. Procédé selon la revendication 1, comprenant en outre le couplage, en utilisant l'interface utilisateur graphique (600), de l'élément de dialogue (531, 532, 533, 534, 535, 536) avec l'élément de commande d'appel (511, 512, 513, 5144, 521, 522, 523, 524, 525, 526, 527).

3. Procédé selon la revendication 1, dans lequel la pluralité d'éléments sélectionner sur l'interface utilisateur graphique (600) comprend un ou plusieurs de : un fichier de dessin, un code source, un fichier exécutable ou toute combinaison de ceux-ci.

4. Procédé selon la revendication 1, dans lequel l'élément de commande d'appel (511, 512, 513, 514, 521, 522, 523, 524, 525, 526, 527) est basé sur : XML de commande d'appel CCXML, Langage de traitement d'appel - CPL, ou toute combinaison de ceux-ci.

5. Procédé selon la revendication 1, comprenant en outre un ensemble d'un ou plusieurs éléments de commande d'appel prédéfinis (511, 512, 513, 514, 521, 522, 523, 524, 525, 526, 527), ledit élément de commande d'appel (511, 512, 513, 514, 521, 522, 523, 524, 525, 526, 527) étant inclus dans l'ensemble.

6. Procédé selon la, revendication 1, dans lequel l'élément de dialogue (531, 532, 533, 534, 535, 536) est basé sur : XML vocal - VXML, langage de balisage de commande de serveur de média - MSCML, langage de balisage de serveur de média- MSML, langage de balisage d'objets de média - MOML, ou toute combinaison de ceux-ci.

7. Procédé selon la revendication 1, comprenant en outre la fourniture d'un ensemble d'un ou plusieurs éléments de dialogue prédéfinis (531, 532, 533, 534, 535, 536), les éléments de dialogue (531, 532, 533, 534, 535, 536) étant inclus dans l'ensemble.

8. Procédé selon la revendication 1, dans lequel l'élément de commande d'appel (511, 512, 513, 514, 521, 522, 523, 524, 525, 526, 527) ou l'élément de dialogue (531, 532, 533, 534, 535, 536) comprend un élément basé sur un script ECMA.

9. Procédé selon la revendication 1, dans lequel la génération du module comprend la configuration de l'élément de commande d'appel (511, 512, 513, 514, 521, 522, 523, 524, 525, 526, 527) ou de l'élément de dialogue (531, 532, 533, 534, 535, 536).

10. Procédé selon la revendication 1, dans lequel la génération du module comprend la définition d'un flux d'appels, le flux d'appel comprenant l'élément de commande d'appel (511, 512, 513, 514, 521, 522, 523, 524, 525, 526, 527) ou l'élément de dialogue (531, 532, 533, 534, 535, 536).

11. Produit logiciel, mis en oeuvre concrètement dans un support d'information, le produit logiciel comprenant des instructions pouvant être appliquées pour faire exécuter par un appareil de traitement des données un procédé selon l'une quelconque des revendications précédentes 1-10.

12. Système comprenant un outil de création de service adapté pour :
fournir une interface utilisateur graphique (600) ;
**caractérisé en ce que** le système est adapté pour
sélectionner sur l'interface utilisateur graphique (600) un élément d'une pluralité d'éléments (511, 512, 513, 5114, 521, 522, 523, 524, 525, 526, 527, 531, 532, 533, 534, 535, 536), la pluralité d'éléments (511, 512, 513, 514, 521, 522, 523, 524, 525, 526, 527, 531, 532, 533, 534, 535, 536) comprenant au moins un élément de commande d'appel (511, 512, 513, 514, 521, 522, 523, 524, 525, 526, 527) et le ou les éléments de dialogue (531, 532, 533, 534, 535, 536), et le ou les éléments de commande d'appel (511, 512, 513, 514, 521, 522, 523, 524, 525, 526, 527) définissant la commande d'au moins un événement d'appel associé avec le ou les éléments de dialogue (531, 532, 533, 534, 535, 536) et
générer à partir d'au moins un élément de commande d'appel (511, 512, 513, 514, 521, 522, 523, 524, 525, 526, 527) et d'au moins un élément de dialogue (531, 532, 533, 534, 535, 536) un module pour applications téléphoniques utilisant l'interface utilisateur graphique (600).
